(19) Europäisches Patentamt
European Patent Office
Office européen des brevets

(11) Veröffentlichungsnummer: **0 314 026 B1**

(12) **EUROPÄISCHE PATENTSCHRIFT**

(45) Veröffentlichungstag der Patentschrift: **23.12.92**

(51) Int. Cl.[5]: **B01J 45/00**, C22B 3/00

(21) Anmeldenummer: **88117635.8**

(22) Anmeldetag: **22.10.88**

Die Akte enthält technische Angaben, die nach dem Eingang der Anmeldung eingereicht wurden und die nicht in dieser Patentschrift enthalten sind.

# (54) Zur selektiven Abtrennung von Metallkationen aus wässrigen Lösungen geeignetes teilchenförmiges Mittel, Verfahren zu seiner Herstellung und seine Verwendung.

(30) Priorität: **28.10.87 DE 3736437**

(43) Veröffentlichungstag der Anmeldung:
**03.05.89 Patentblatt 89/18**

(45) Bekanntmachung des Hinweises auf die Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**EP-A- 0 066 630** **DE-A- 1 810 452**
**FR-A- 2 222 129** **GB-A- 980 185**
**US-A- 4 118 336** **US-A- 4 324 767**

(73) Patentinhaber: **Solvay Umweltchemie GmbH**
**Seligmannallee 1 Postfach 220**
**W-3000 Hannover 1(DE)**

(72) Erfinder: **Vorlop, Klaus-Dieter, Dipl.-Chem.**
**Hochstrasse 7**
**W-3300 Braunschweig(DE)**
Erfinder: **Sell, Michael, Dipl.-Chem.**
**Mergelkamp 5**
**W-3150 Peine(DE)**

(74) Vertreter: **Lauer, Dieter, Dr.**
**c/o Kali-Chemie Aktiengesellschaft Postfach 220**
**W-3000 Hannover 1(DE)**

**EP 0 314 026 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein zur sekektiven Abtrennung von Metallkationen aus wäßrigen Lösungen geeignetes teilchenförmiges Mittel. Die Erfindung betrifft ferner Verfahren zur Herstellung des erfindungsgemäßen Mittels und seine Verwendung.

Mittel zur Entfernung von ionischen Bestandteilen aus wässrigen Lösungen sind bekannt. So werden Ionenaustauscherharze zur Abtrennung von Ionen aus wässrigen Lösungen eingesetzt. Geringe Selektivität, abnehmende Aktivität und Austrag des Harzes in die wässrige Lösung sind unerwünschte Begleiterscheinungen bei der Verwendung dieser Harze.

In der US-PS 4 500 494 wird ein Mittel zur Entfernung von Metallkationen aus Wasser offenbart, welches einen wasserunlöslichen, entweder flüssigen oder in einem wasserunlöslichen Lösungsmittel gelösten Chelatbildner in Mikrokapseln enthält, die eine Hülle aus Polyharnstoff oder Harnstoff-Formaldehyd besitzen. Ein Nachteil dieses Mittels liegt darin begründet, daß das Lösungsmittel in den Mikrokapseln aus gegebenenfalls chlorierten aromatischen oder chlorierten aliphatischen Kohlenwasserstoffen besteht. Eine ständige Diffusion des Lösungsmittels durch die Polymer-Hülle ist unvermeidlich.

Aufgabe der Erfindung ist es, die Nachteile der bekannten Mittel zu überwinden und Abtrennmittel mit verbesserter Selektivität und Effektivität zu entwickeln. Diese Aufgabe wird gelöst durch das erfindungsgemäße, zur selektiven Entfernung von Metallkationen aus wäßrigen Lösungen geeignete teilchenförmige Mittel.

Das erfindungsgemäße, zur selektiven Entfernung von Metallkationen aus wäßrigen Lösungen geeignete teilchenförmige Mittel, enthaltend ein die Metallkationen komplexierendes Agens dispergiert in einer kontinuierlichen wäßrigen Phase, welche gegebenenfalls in ein hydrophiles Gel eingebettet und/oder Bestandteil eines hydrophilen Gels ist dadurch gekennzeichnet, daß es als Agens ein organisches, nicht ionisches, nicht polymeres, die Metallkationen komplexierendes Agens mit einem Molgewicht <1000 Dalton enthält und die das Agens enthaltende wäßrige Phase
von einer wasserunlöslichen, ionenpermeablen Hülle umgeben ist oder
in ein hydrophiles Gel eingebettet und/oder Bestandteil eines hydrophilen Gels ist.

Unter "nicht polymer" wird im Rahmen der vorliegenden Erfindung verstanden, daß das Agensmolekül maximal 9 sich wiederholende Monomereinheiten besitzen kann. Vorzugsweise ist das komplexierende Agens eine monomere oder auch dimere Substanz.

Unter "nicht ionisch" wird im Rahmen der vorliegenden Erfindung verstanden, daß die Kopplung von Metallkationen an funktionelle Gruppen des komplexierenden Agens nicht über Ionenbindung erfolgt. Die erfindungsgemäß verwendeten komplexierenden Agentien bilden mindestens eine koordinative Bindung zum Metallion aus.

Das in dem erfindungsgemäßen Mittel enthaltene komplexierende Agens kann aus einer zur Komplexierung von Metallkationen geeigneten Verbindung oder aus Gemischen mehrerer komplexierender Verbindungen bestehen.

Erfindungsgemäße verwendbare organische, wasserunlösliche, Metallkationen komplexierende Agentien sind dem Fachmann an sich bekannt. Sie können eine oder mehr zur Komplexbildung geeignete funktionelle Gruppen besitzen. Die Komplexbindung zum Metallkation erfolgt über Atome mit einerm oder mehreren freien Elektronenpaaren, insbesondere über Stickstoff-, Phosphor-, Sauerstoff-, Schwefel- oder Selenatome. Beispiele für geeignete funktionelle Gruppen sind Aminogruppen, vorzugsweise sekundäre und tertiäre Aminogruppen, Phosphinogruppen, vorzugsweise sekundäre und tertiäre Phosphinogruppen, Hydroxy-, Mercapto-, Keto-, Thioketo-, Selenoketo, Äther-und Oximgruppen. Weitere funktionelle Gruppen in komplexierenden Agentien sind die Oxosäuregruppen sowie ihre Ester- und Amidgruppen, insbesondere Carboxyl-, Sulfonyl- und Phosphonylester- und amidgruppen. Als Amide kommen insbesondere die N-mono-oder N-bisubstituierten Amide in Frage, wobei als Substituenten $C_4$-$C_{15}$-Alkyl gut geeignet sind. Als Ester kommen Alkylester, insbesondere $C_4$-$C_{15}$-Alkylester in Frage. Je nach Anzahl der zur Komplexbildung befähigten funktionellen Gruppen handelt es sich um ein- oder mehrzähnige Agentien.

Als Metallkationen komplexierendes Agens sind beispielsweise die aus der Hydrometallurgie bekannten sauren, basischen oder solvatisierenden Extraktionsmittel verwendbar, vgl. z.B. M. Cox, D. Flett, Chem. Ind., Seiten 118 bis 193 (1987).

Zu den erfindungsgemäß verwendbaren sauren Extraktionsmitteln gehören beispielsweise Alkyl- oder Aryl-Carbonsäuren. Alkyl bedeutet hier längerkettige, gegebenenfalls verzweigte aliphatische Reste, vorzugsweise mit einer $C_5$ - $C_{15}$-Kette, Aryl bedeutet einen gegebenenfalls substituierten aromatischen Rest, insbesondere Phenyl oder Naphthyl; zu erwähnen sind die zur Cu/Ni-Trennung geeigneten Naphtensäuren. Weiterhin gehören hierzu Phosphor-, Phosphon-, Thiophosphor- oder Thiophosphonsäure-Derivate, beispielweise Alkylphosphor-, Alkylphosphonsäuren oder O,O-Dialkyldithiophosphorsäuren. Als Alkylreste kommen

hier beispielsweise längerkettige, gegebenenfalls verzweigte aliphatische Reste in Frage, insbesondere $C_4$-$C_{12}$-Alkyl, beispielsweise n-Octyl oder 2-Ethylhexyl. Erwähnt sei die zur Europium-Extraktion geeignete Bis-(2-Ethylhexyl)-phosphorsäure.

Auch bekannte chelatisierende saure Extraktionsmittel können im erfindungsgemäßen Mittel als komplexierendes Agens dispergiert enthalten sein. Hier sind beispielsweise Diketone, insbesondere $\beta$-Diketone, ihre Thio-und Seleno-Analoga sowie Derivate zu erwähnen. Derartige Diketon-Derivate besitzen die allgemeine Formel (I)

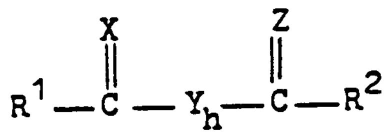

(I)

worin

- $R^1$ und $R^2$ je unabhängig voneinander H; gegebenenfalls verzweigtes und/oder substituiertes Alkyl mit 1 bis 20, vorzugsweise 1 bis 6 C-Atomen; gegebenenfalls substituiertes Phenyl oder eine Aminogruppe $NR^3R^4$ bedeuten, wobei $R^3$ , $R^4$ H; gegebenenfalls verzweigtes und/oder substituiertes Alkyl mit 1 bis 15, vorzugsweise 1 bis 7 C-Atomen, insbesondere Ethyl, n-Butyl, n-Hexyl; Phenyl; substituiertes Phenyl darstellen,
- X und Z je unabhängig voneinander O, S oder Se bedeuten, wobei bevorzugt einer der beiden O ist,
- Y -$CH_2$- oder -NH- bedeutet, wobei NH bavorzugt ist, und
- n für 0, 1, 2, vorzugsweise für 1 steht.

Besonders bevorzugt sind Diketonderivate der allgemeinen Formel (I), worin

- $R^1$ niederes Alkyl oder Phenyl oder eine Aminogruppe $NR^3R^4$ bedeutet, worin $R^3$ und $R^4$ Alkyl mit 1 bis 6 C-Atomen oder Phenyl bedeutet,
- $R^2$ Phenyl bedeutet,
- eines von X und Z für O steht und das andere für O, S oder Se
- Y -NH- bedeutet und
- n für 1 steht.

Als Beispiele von Verbindungen der Formel I, worin Y eine -NH-Gruppe und $R^1$ eine Aminogruppe $NR^3R^4$ darstellen, sind acylsubstituierte Harnstoff-, Thioharnstoff-und Selenoharnstoff-Derivate, insbesondere N′-Alkylcarbonyl- und N′-Benzoyl-substituierte Derivate zu nennen. Hervorzuheben sind die zur Edelmetallabtrennung geeigneten N-Alkyl- oder N-Arylsubstituierten Derivate, insbesondere die N,N-Dialkyl-N′-benzoylthioharnstoffe, wie N,N-Di-n-hexyl- und N,N-di-n-butylderivate, ferner N,N-disubstituierte N′-benzoylselenoharnstoffe, wobei als Substituenten beispielsweise Ethyl-, n-Butyl- und Phenylgruppen in Frage kommen. Als weiteres Beispiel von einsetzbaren Diketon-Derivaten sollen acylsubstituierte Acetamide bzw. Thioacetamide, insbesondere die zur Abtrennung von Nickel, Kobalt, Kupfer, Zink und Cadmium geeigneten 2-Benzoylthioacetamide erwähnt werden, beispielsweise N-Phenyl-2-benzoylacetamid.

Als komplexierendes Agens kommen ferner die als saure, chelatisierende Extraktionsmittel bekannten Chinolinderivate in Frage. Besonders zu erwähnen sind die 8-Hydroxy-Derivate sowie ihre Thio- und Seleno-Analoga. Neben den unsubstituierten Verbindungen kommen auch substituierte Verbindungen in Frage, insbesondere die am $C_7$-Atom durch Alkylreste substituierte Verbindungen. Zu den letzteren gehören beispielsweise die bekannten 7-Alkyl-8-Hydroxychinoline. Alkyl bedeutet gegebenenfalls verzweigte und/oder substituierte längerkettige Reste mit 6 bis 20 C-Atomen, insbesondere 8 bis 12 C-Atomen. Genannt werden soll beispielsweise das 7-Ethylhexyl-Derivat (Kelex 108 [R], Schering AG), das 7-(1-Methyl-4-ethyl-oktyl)-Derivat (Kelex 100 [R], Schering AG), sowie das 7-Dodecenyl-Derivat (Kelex 100 [R], Ashland Chemical Co.).

Als komplexierendes Agens verwendbar sind beispielsweise auch bekannte komplexierende Oxime und Dioxime, insbesondere Oxime der allgemeinen Formel (II) mit einer Hydroxygruppe in $\alpha$-Position und Oxime der allgemeinen Formel (III) mit einer Hydroxygruppe in $\beta$-Position:

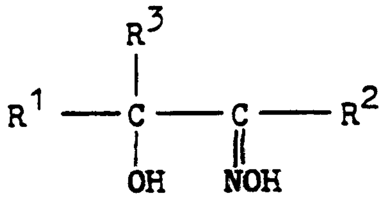

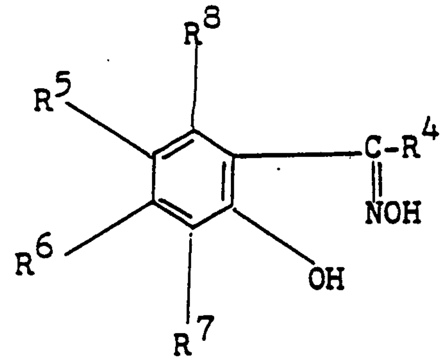

(II) (III)

a) wobei $R^1$, $R^2$, $R^3$ und $R^4$ gleich oder verschieden sind und Wasserstoffatome; ggf. durch Halogen, durch Aryl, insbesondere Phenyl, oder durch die $NO_2$-Gruppe substituiertes, geradkettiges oder verzweigtes Alkyl mit 1 bis 12 C-Atomen; ggf. durch Alkyl-, Halogen oder die $NO_2$-Gruppe substituiertes Aryl, insondere Phenyl bedeuten und

b) $R^5$, $R^6$, $R^7$ und $R^8$ gleich oder verschieden sind und Wasserstoffatome; Halogen; geradkettiges oder verzweigtes, ggf. durch Halogen oder die $NO_2$-Gruppe substituiertes Alkyl mit 1 bis 30 C-Atomen bedeutet.

Besonders gut geeignet sind Verbindungen der allgemeinen Formel (IV)

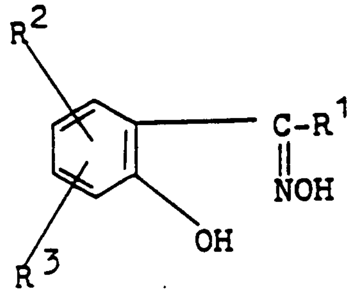

(IV)

worin

- $R^1$ H; gegebenenfalls substituiertes Alkyl mit 1 bis 3 C-Atomen; gegebenenfalls substituiertes Phenyl bedeutet
- $R^2$ längerkettiges, gegebenenfalls verzweigtes Alkyl vorzugsweise in 5-Stellung mit 6 bis 30 C-Atomen, insbesondere 8 bis 15 C-Atomen; gegebenenfalls substituiertes Aryl, vorzugsweise in 5-Stellung bedeutet und
- $R^3$ H; Halogen, vorzugsweise Cl, insbesondere in 3-Stellung bedeutet.

Beispielhaft zu erwähnen seien 2-Hydroxy-5-alkylacetophenonoxime, insbesondere dasjenige, in welchem Alkyl gleich t-Nonyl ist (SME 529 $^R$, Hersteller: Shell) sowie 3-Cl-5-nonyl-2-hydroxy-phenylketoxim (LIX 70 $^R$, Hersteller: Henkel Corp.).

Außer den vorstehend erläuterten sauren Extraktionsmitteln können als Metallkationen komplexierendes Agens auch basische Extraktionsmittel in Betracht kommen. Auch diese sind dem Fachmann bekannt. Es handelt sich beispielsweise um wasserunlösliche primäre, sekundäre oder tertiäre Amine, Diamine oder Oligoamine. Als Substituenten kommen bevorzugt längerkettige, gegebenenfalls verzweigte Alkylgruppen mit 4 bis 20 C-Atomen in Betracht. Von den vielen bekannten basischen Extraktionsmitteln soll hier lediglich Diisotridecylamin (HOE F 2562 $^R$, Hoechst AG) erwähnt werden.

Als Metallkationen komplexierendes Agens im Rahmen der vorliegenden Erfindung können neben den sauren bzw. basischen Extraktionsmitteln auch wasserunlösliche, solvatisierende Extraktionsmittel verwendet werden. Hierzu gehören z.B. an sich bekannte Phosphorsäurederivate der allgemeinen Formel (V)

$R_m(RX)_nPX$ (V)

mit

R = lineares oder verzweigtes, gegebenenfalls substituiertes Alkyl mit 3 bis 12 C-Atomen, gegebenenfalls substituiertes Aryl, insbesondere Phenyl

X = O, S

m = 0 bis 3

n = 3 bis 0 mit m + n = 3

Erwähnt werden sollen z.B. die zur Uranextraktion geeigneten Derivate Tri-n-butylphosphat oder Tri-n-octylphosphinoxid.

Als komplexierendes Agens verwendbar sind ferner zu den solvatisierenden Extraktionsmitteln gehörende cyclische Verbindungen aus 2 bis 9 Einheiten der allgemeinen Formel (-RX-)(VI), wobei

R in den einzelnen Einheiten unabhängig voneinander Niedrigalkylen, insbesondere Ethylen, Trimethylen, gegebenenfalls durch Sauerstoff und/oder geradkettiges oder verzweigtes Alkyl mit 10 bis 20, insbesondere 15 bis 17 C-Atomen substituiert; gegebenenfalls substituiertes o-Phenylen, vorzugsweise durch Niedrigalkyl, insbesondere in 4-Stellung substituiertes o-Phenylen, insbesondere 4-Butyl-o-phenylen bedeutet, und

X in den einzelnen Einheiten unabhängig voneinander für O,S, NH steht.

Verwendbar sind beispielsweise bekannte cyclische Äther mit 2 bis 9 $-O-CH_2-CH_2-$, $-O-CH_2-CH_2-CH_2-$ oder O-o-Phenylen-Einheiten, sowie Derivate z.B. deren N-Analoga oder S-Analoga, wie der zur Silber- oder Palladium-Abtrennung geeignete Kronenäther 8,9,17,18-Di(4-t-butylbenzo)-1,7-dithia-18-krone-6, ferner Dioxocyclam und seine Derivate.

Dem Fachmann ist bekannt, daß die Selektivität der verwendbaren komplexierenden Agentien bei der Abtrennung von Metallkationen aus wäßrigen Lösungen im wesentlichen abhängt vom chemischen Aufbau des komplexierenden Agens sowie gegebenenfalls vom pH-Wert und der Temperatur der wäßrigen Lösung.

Dem Fachmann ist auch bekannt, unter welchen Bedingungen hinsichtlich pH-Wert und Temperatur die an sich bekannten komplexierenden Agentien bestimmte Metallkationen selektiv abtrennen können.

Da die Selektivität der komplexierenden Agentien sich bei der Verwendung im erfindungsgemäßen Mittel nicht verändert, ist dem Fachmann bekannt, welche komplexierenden Agentien verwendet werden müssen, um ein Mittel zur Abtrennung eines gewünschten Metalles herzustellen und unter welchen Bedingungen hinsichtlich pH-Wert und Temperatur das Mittel zur selektiven Abtrennung von Metallkationen verwendet wird.

Beispielsweise gelingt es, durch Verwendung von bestimmten N,N-Dialkyl-N′-benzoyl-thioharnstoffen (Alkyl = Ethyl-, n-Hexyl-, n-Butyl) und Variation des pH-Wertes, selektiv Palladiumgruppenmetalle voneinander zu trennen.

N-Phenyl- und N-Butyl-2-acylthioacetamid enthaltende erfindungsgemäße Mittel können Ni, Co, Cu, Zn, Cd-Ionen selektiv unter Variation von pH-Wert und Temperatur aus wässrigen Lösungen entfernen.

Erfindungsgemäße Mittel enthaltend 7-Alkyl-8-hydroxychinoline (Kelex-Typen der Schering AG und von Ashland Chemical Co.) können Ionen von Cu, Co, Zn, Cd, Mo selektiv unter Variation des pH-Wertes voneinander und , Sb, As, Ga oder Ge von Verunreinigungen abtrennen.

Enthält das erfindungsgemäße Mittel 2-Hydroxy-5-t-nonyl-acetophenonoxim (Shell SME 529), lassen sich Cu- und bedingt Ni-Ionen selektiv von anderen Metallkationen abtrennen.

Auch spezielle Kronenether, vgl. K. Gloe et. al., Z. Chem. 26, S. 109 bis 110 (1986) oder cyclische Aminoverbindungen, vgl. E. Kinura, J. Chem. Soc., Chem. Comm. 1986, S. 1020 bis 1022 können selektiv komplexierend wirken.

Es soll noch einmal darauf hingewiesen werden, daß die vorstehend erwähnten Metallkationen komplexierenden Agentien nur eine unvollständige Auswahl der dem Fachmann bekannten einsetzbaren Agentien darstellen. Voraussetzung für die Verwendbarkeit im erfindungsgemäßen Mittel ist, daß das jeweilige Agens in Wasser ausreichend schlecht löslich ist. Als günstig erweisen sich beispielsweise komplexierende Agentien, deren Löslichkeit in Wasser kleiner als etwa 10 mg/l Wasser ist.

Das komplexierende Agens kann per se in der wäßrigen Phase emulgiert bzw. suspendiert vorliegen. Es kann aber auch eine Lösung des komplexierenden Agens in einem wasserunlöslichen Lösungsmittel in der wäßrigen Phase dispergiert werden. Als Lösungsmittel für das Agens eignen sich insbesondere aliphatische oder cycloaliphatische Kohlenwasserstoffe höheren Siedepunktes, z.B. von etwa 120 °C bis etwa 300 °C, in reiner Form oder als Gemisch in Frage kommen. Sehr gut geeignet ist beispielsweise Kerosin. Das erfindungsgemäße Mittel kann das Lösungsmittel in einer Menge von 0 bis zu etwa 40 Gew.-%, bezogen auf das Gesamtgewicht des fertigen Mittels enthalten.

Sofern ein wasserunlösliches Lösungsmittel im erfindungsgemäßen Mittel enthalten ist, kann das

Verhältnis der Mengen an Lösungsmittel und komplexierenden Agens in einem weiten Bereich schwanken, beispielsweise von etwa 0,1:1 bis etwa 10:1, vorzugsweise von etwa 0,2:1 bis etwa 2:1.

Gewünschtenfalls kann das komplexierende Agens auch zunächst an feste Trägerstofe gekoppelt werden, beispielsweise physikalisch durch hydrophobe Wechselwirkung über längere C-Kohlenstoffketten und das mit dem Agens gekoppelte Trägermaterial sodann in der wäßrigen Phase suspendiert werden. Diese Verfahrensweise eignet sich insbesondere für solche Agentien, welche per se schwach wasserlöslich sind und Agentien deren Löslichkeit im Wasser bis zu etwa 1000 mg/l betragen kann. Durch das Koppeln dieser Agentien an den festen Trägerstoff kann ein Ausbluten aus dem erfindungsgemäßen Mittel verhindert werden.

Als Trägerstoffe kommen an sich bekannte Feststoffe mit hydrophobierter Oberfläche in Betracht. Es können z.B. hochfeine, beispielsweise auf eine Teilchengröße von etwa 0,01 bis 10 Mikrometer, insbesondere von 0,1 bis 2 Mikrometer, vermahlene keramische Materialien, insbesondere auf Siliciumdioxid-Basis eingesetzt werden. Sehr gut geeignet sind hydrophobierte Siliciumdioxid-Aerogele. Derartige Aerogele enthalten auf der Oberfläche beispielsweise Alkyl-, Dialkyl- oder Trialkylsilylgruppen, die über drei, zwei oder ein Sauerstoffatom chemisch an den Träger gebunden sind. Alkyl kann sein $C_1$ bis etwa $C_{12}$-Alkyl. Besonders gut geeignet ist ein Siliciumdioxid-Aerogel, in welchem Oktylsilylgruppen chemisch an die Oberfläche des Trägers gebunden sind. Ein solches Aerogel ist erhältlich unter der Bezeichnung Aerosil R 805 $^{R}$ von der Degussa AG, Frankfurt.

In den erfindungsgemäßen Teilchen kann die das komplexierende Agens dispergiert enthaltende kontinuierliche wäßrige Phase Bestandteil eines Hydrogels sein oder in ein hydrophiles Gel eingebettet sein. Die kontinuierliche Phase kann also in dem Gel frei beweglich oder im wesentlichen ortsfest gebunden vorliegen.

Als hydrophile Gele können erfindungsgemäß alle vernetzten anorganischen oder organischen Hydrogele verwendet werden, wobei organische hydrophile vernetzte Gele bevorzugt sind.

Anorganische Hydrogele sind dem Fachmann an sich bekannt, vgl. z.B. A. Kuhn, Kolloidchemisches Taschenbuch, Geest und Portig KG, Leipzig 1948, S. 335 bis 348. Als erfindungsgemäß verwendbare anorganische Gele bieten sich beispielsweise siliciumoxidhaltige Gele wie Kieselsäure, aluminiumoxidhaltige Gele wie Aluminiumoxyhydrate, Gemische von beiden, wie Kieselsäure-Tonerde, oder auch Montmorillonit und Bentonit an.

Die anorganischen Gele werden in an sich bekannter Weise durch Vernetzung von entsprechenden Gelvorstufen, z.B. wasserlöslichen, durch Säure vernetzbaren Alkalimetallsilikaten oder -aluminaten wie Wasserglas oder Natriumaluminaten oder durch Base gelierbare Silicium- oder Aluminiumsalze wie $SiCl_4$ oder $AlCl_3$ erhalten werden.

Organische, hydrophile Gele umfassen kovalent und nicht kovalent vernetzte Gele und sind dem Fachmann ebenfalls an sich bekannt, z.B. aus B. Vollmert, Grundriss der makromolekularen Chemie, E. Vollmert-Verlag, Karlsruhe 1979. Die Gele werden in an sich bekannter Weise gebildet druch Vernetzung entsprechender vernetzbarer Gelvorstufen (= Gelbildner). Die Gelbildner können thermisch, das ist durch Einwirkung von Hitze oder von Kälte vernetzbar oder mit Hilfe eines Vernetzungsmittels vernetzbar sein. In den durch Vernetzungsmittel vernetzten Gelen gehören nicht kovalent vernetzte Gele, welche aus entsprechenden ionotropen Gelbildnern durch Vernetzung unter Einwirkung von Metallkationen oder von Anionen oder pH-Wert-Änderung gebildet werden, und kovalent vernetzte Gele, deren Vorstufen bei der Umsetzung mit dem Vernetzungsmittel durch Ausbildung kovalenter Bindungen vernetzen.

Als Gelvorstufe von hydrophilen organischen Gelen sind viele bekannte Naturprodukte tierischer, pflanzlicher oder bakterieller Herkunft verwendbar. Gelierbare Produkte tierischer Herkunft sind beispielsweise Polypeptide, wie Gelatine. Gelierbare Produkte pflanzlicher Herkunft sind beispielsweise viele Polysaccharide, z.B. Pectinate, Carrageenan, Agar oder Agarose. Bakteriell erhältliche Polysaccharide sind beispielsweise Curdlan oder Gellan.

Zu den Gelbildnern gehören auch viele modifizierte, das heißt chemisch veränderte Naturprodukte. Die Modifizierung kann beispielsweise durch Alkylierung, Dealkylierung, Carboxylierung, Decarboxylierung, Acetylierung oder Deacetylierung etc. erfolgen. Als derartig modifizierte Gelbildner sind beispielhaft zu nennen derivatisierte Cellulose, z.B. Cellulosesulfat oder Carboxymethylcellulose, partiell deacetyliertes Gellan, ferner gelierfähige aminozuckerhaltige Polysaccharide, z.B. das durch teilweise Deacetylierung von Chitin erhältliche Chitosan.

Als Gelbildner von thermisch vernetzten Gelen sind beispielsweise Polypeptide, z.B. Gelatine, und gegebenenfalls modifizierte Polysaccharide, z.B. Agar, Curdlan oder Agarose zu nennen.

Zu den durch ein Vernetzungsmittel vernetzbaren Gelbildnern gehören die anorganischen Vorstufen und die durch Ionen vernetzbaren organischen ionotropen Gelbildner.

Bevorzugte ionotrope Gelbildner von durch Kationen (geeignete Ionen in Klammern) vernetzten Gelen

besitzen als Gerüst eine Kette aus polymeren Sacchariden. Als funktionelle Gruppe besitzen sie die Carboxyl-Gruppe, wie Alginat ($Ca^{2+}$, $Al^{3+}$, $Zn^{2+}$), Pectat ($Mg^{2+}$, $Ca^{2+}$), Carboxymethylcellulose ($Al^{3+}$); die Phosphonylgruppe, wie Phosphoguargum ($Ca^{2+}$, $Al^{3+}$), oder die Sulfonylgruppe, wie Carrageenan ($K^{+}$, $Ca^{2+}$) und Cellulosesulfat ($K^{+}$). Ferner sei das durch $Na^{+}$, $K^{+}$, $Ca^{2+}$, $Mg^{2+}$ oder $Al^{3+}$ vernetzbare Gellan erwähnt, das auch in deacetylierter Form einsetzbar ist.

Bevorzugte ionotrope Gelbildner von durch Anionen vernetzten Gelen besitzen als Gerüst eine Kette aus aminozuckerhaltigen Polysacchariden. Als funktionelle Gruppe besitzen sie die Aminogruppe, welche in protonierter Form anionisch vernetzbar ist. Ein oder mehrere Wasserstoffatome der Aminogruppe können substituiert sein, z.B. durch Alkylreste oder Acetylgruppen. Beispielhaft zu nennen ist Chitosan, welches u.a. durch polyphosphate, Hexacyanoferrat (II) und Hexacyanoferrat (III) vernetzt werden kann.

Durch Erniedrigung des pH-Wertes, also Zugabe einer Säure, können ionotrope Gelbildner geliert werden, die als funktionelle Gruppe Säurereste aufweisen, beispielsweise die Carboxygruppe, die Phosphonylgruppe oder die Sulfonylgruppe. Beispielhaft zu nennen sind entsprechend substituierte Polysaccharide, wie Alginate und Pectate, aus denen sich Alginsäure bzw. Polygalacturonsäure bildet.

Durch Erhöhung des pH-Wertes, also Zugabe einer Base, gelieren ionotrope Gelbildner mit aminozukkerhaltigen Polysacchariden, beispielsweise Chitosan.

Erfindungsgemäß verwendbare kovalent vernetzte, hydrophile, organische Gele können in an sich bekannter Weise durch Polyreaktionen wie Polykondensation, Polyaddition oder Polymerisation, vorzugsweise durch Polykondensation oder Polyaddition aus Prepolymeren hergestellt werden. Bevorzugte, durch Polyaddition erhaltene hydrophile Polymere sind entsprechend substituierte Polyurethane (PU) und Polyharnstoffe.

Geeignete PU-Prepolymere sind z.B. die Typen Hypol $^{R}$ FHP 2000, 2002, 3000 oder 4000 der Fa. Grace, Lexington.

Als kovalent vernetztes Gel, welches im erfindungsgemäßen Mittel enthalten sein kann, kommen ferner durch geeignete Vernetzungsmittel kovalent vernetzte, ionotrope Gelbilder, die ein aminozuckerhaltiges Polysaccharidgerüst besitzen, beispielsweise Chitosan, oder thermisch vernetzbare Gelbildner, die ein Polypeptidgerüst besitzen, beispielsweise Gelatine, in Frage. Geeignete Vernetzungsmittel sind an sich bekannt. Sie enthalten zwei oder mehr funktionelle, aminvernetzende Gruppen; als solche zu nennen sind beispielsweise die Aldehyd-, Isocyanat-, Thioisocyanat-, Azo-Gruppe. Es werden difunktionelle Vernetzungsmittel verwendet, die wasserlöslich sind, mit Wasser jedoch nicht oder nur langsam reagieren. Insbesondere sind zu nennen Diisocyanate, z.B. Tolyldiisocyanat, sowie Dialdehyde, z.B. Glutardialdehyd. Sehr gut geeignet sind Gele aus Chitosan, vernetzt mit Glutardialdehyd.

Sofern die das komplexierende Agens dispergiert enthaltene wäßrige Phase nicht Bestandteil eines hydrophilen Geles oder in ein hydrophiles Gel eingebettet ist, muß sie von einer wasserunlöslichen, ionenpermeablen Hülle umgeben sein. Es kann zweckmäßig sein, zur Erhöhung des Teilchenstabilität diese Hülle noch mit einer weiteren zusätzlichen wasserunlöslichen, ionenpermeablen Hülle zu umgeben.

Es ist vorteilhaft, eine zusätzliche wasserunlösliche ionenpermeable Hülle auch dann einzusetzen, wenn die kontinuierliche wäßrige Phase in ein Gel eingebettet bzw. Bestandteil eines Gels ist. Die Hülle bewirkt eine erhöhte mechanische Stabilität. Außerdem wird ein Austrag des komplexierenden Agens in die zu reinigende wässrige Lösung durch Umhüllen des Gelkörpers vermieden. Dies ist insbesondere wichtig, wenn das Agens flüssig ist oder in einem Lösungsmittel gelöst vorliegt. Es kann auch notwendig sein, die Gelstruktur von Kontakt mit schädlichen Verunreinigungen im Wasser zu schützen. Sofern eine Wiederaufarbeitung des beladenen Mittels beabsichtigt ist, ist ebenfalls eine Umhüllung des Gels zweckmäßig.

Die vorzugsweise von komplexierendem Agens freie Hülle kann aus den bereits vorstehend beschriebenen hydrophilen vernetzten Gelen bestehen, wobei hydrophile, organische, vernetzte Gele bevorzugt sind, insbesondere ionotrop vernetzte und kovalent vernetzte Gele.

Als ionotrop vernetzte Hüllmaterial kommt neben den bereits beschriebenen, ionotrop vernetzten Gelen auch anderes ionenpermeables Material in Frage, z.B. Gele, welche erhalten werden, indem man zwei verschiedene ionotrope Gelvorstufen mit funktionellen Gruppen unterschiedlicher Polarität miteinander vernetzt. Als Beispiele seien aus Chitosan, vernetzt z.B. mit Alginat, Pektat, Carboxymethylcellulose, Phosphoguargum, Carrageenan und/oder Cellulosesulfat, erhaltene Gele genannt.

Die Hülle kann auch aus kovalent vernetztem Gel gebildet sein. Beispielsweise kann es sich um ein Harnstoff-Formaldehyd-Polymer handeln.

Es ist möglich, im erfindungsgemäßen Mittel enthaltene Gele und/oder das Hüllmaterial durch chemische Modifizierung noch zu verstärken.

Beispielsweise können durch Kationen vernetzte ionotrope Gele bzw. entsprechendes Hüllmaterial mit Säure behandelt werden. Das Gel bzw. Hüllmaterial enthält dann freie, unlösliche Säuren, beispielsweise Algin- oder Polygalacturonsäure.

Aminozuckerhaltige, durch Anionen vernetzte Gele bzw. entsprechendes Hüllmaterial, beispielsweise durch Tripolyphosphat ionotrop vernetztes Chitosan-Gel, kann beispielsweise mit Base behandelt werden. Das Gel bzw. Hüllmaterial enthält dann deprotoniertes, unlösliches Chitosan.

Es ist ferner möglich, aminozuckerhaltige ionotrop vernetzte Gele durch Derivatisierung zu verstärken. Beispielsweise kann durch Tripolyphosphat vernetztes Chitosan acetyliert werden. Das Gel bzw. Hüllmaterial enthält dann schwerlösliches Chitin.

Ferner ist es möglich, ein nicht kovalent vernetztes Gel bzw. Hüllmaterial durch zusätzliche kovalente Vernetzung zu verstärken.

Es kann besonders vorteilhaft sein, ein nicht kovalent vernetztes Hüllmaterial durch eine zusätzliche kovalente Vernetzung zu verstärken. Beispielsweise kann ein aminogruppenhaltiges Hüllmaterial durch zusätzliche kovalente Vernetzung mittels einer der bereits vorstehend beschriebenen Aminvernetzungsmittel verstärkt werden. So kann man beispielsweise Polypeptide, z.B. Gelatine, oder mit Tripolyphosphat oder Hexacyanoferrat ionotrop vernetzte aminozuckerhaltige Polysaccharide, wie Chitosan, mittels Glutardialdehyd zusätzlich kovalent vernetzen.

Ein besonders bevorzugtes Mittel enthält die Dispersion des komplexierenden Agens dispergiert in der wäßrigen Phase, welche in ein thermisch vernetzte Gel, insbesondere Agar oder Agarose, eingebettet ist, mit einer Hülle, erhältlich durch kovalente Vernetzung eines aminozuckerhaltigen Polysaccharids, insbesondere Chitosan, mit einem difunktionellen Vernetzungsmittel, bevorzugt Glutardialdehyd.

Gewünschtenfalls kann die kontinuierliche wäßrige Phase, gegebenenfalls auch die sie umgebende ionenpermeable Hülle, ein oder mehrere an sich bekannte Hilfsmittel zur Modifizierung der Teilcheneigenschaften enthalten. Als Hilfsmittel können insbesondere die Viskosität modifizierende, vorzugsweise die Viskosität erhöhende Mittel, die Dichte modifizierende Mittel, den pH-Wert beeinflussende sowie die Oberflächenspannung modifizierende Mittel zugesetzt werden.

Als viskositätserhöhende Mittel kommen die bereits als ionotrope Gelbildner beschriebenen Verbindungen in Betracht. Besonders gut geeignet sind durch Carboxygruppen substituierte Polysaccharide, zum Beispiel Carboxymethylcellulose, sowie Derivate, z.B. Carboxymethylcelluloseether.

Zur Erniedrigung der Dichte kommen vorzugsweise Mittel einer Dichte $< 0,9$ g/cm$^3$ in Betracht. Dies können z.B. wasserunlösliche Feststoffe, beispielsweise geschäumte Kunststoffe oder Schaumglas, oder organische wasserunlösliche Substanzen sein, beispielsweise die gleichzeitig als Lösungsmittel für komplexierenden Agentien verwendbaren aliphatische Kohlenwasserstoffe, insbesondere Kerosin. Als Dichte erhöhende Mittel werden wasserunlösliche Mittel vorzugsweise mit einer Dichte $> 2$ g/cm$^3$, beispielsweise Schwerspat oder Titandioxid, verwendet.

Als die Oberflächenspannung modifizierende Mittel werden an sich bekannte Emulgatoren (Tenside) verwendet. Günstig sind Emulgatoren mit einem HLB-Wert $> 8$, vorzugsweise zwischen 8 und 18, das sind Öl-in-Wasser-Emulgatoren. Beispiele geeigneter Emulgatoren finden sich in Fiedler, H.P., Lexikon der Hilfsstoffe für Pharmazie, Kosmetik und angrenzende Gebiete, Aulendorf 1971, S. 265 bis 270. Beispiele für einsetzbare Emulgatoren sind Fettsäureester, z.B. Polyoxyethylenmonolaurat (PEG-300), Polyoxyethylen-(20)-Sorbitantristearat (Tween 65), Sulfonate, z.B. Alkylarylsulfonate (G-3300), Aminsalze wie Didodecyldimethylammoniumchlorid, nichtionische Alkylpolyglycolether, z.B. Emulsogen LP, Hoechst AG, oder Kombinationen anionischer Verbindungen mit Lösevermittlern, z.B. Emulsogen L, Hoechst AG.

Das erfindungsgemäße Mittel ist vorzugsweise im wesentlichen kugelförmig, stäbchenförmig oder fadenförmig ausgebildet.

Der Durchmesser der Kugeln liegt im Bereich zwischen 0,1 und 6 mm, bevorzugt beträgt der Durchmesser etwa 1,5 mm. Falls das erfindungsgemäße Mittel stäbchenförmig vorliegt, beträgt der Durchmesser der Stäbchen 0,1 bis 6 mm, vorzugsweise 1 bis 1,5 mm, und die Länge 2 bis 30 mm, vorzugsweise 8 bis 12 mm. Das erfindungsgemäße Mittel kann auch in Form von Fäden vorliegen, deren Durchmesser dann 0,1 bis etwa 6 mm, vorzugsweise 0,5 bis 3 mm betragen kann.

Der Wassergehalt des teilchenförmigen Mittels liegt zwischen etwa 40 und 90 Gew.-%. Der Anteil an Metallkationen komplexierendem Agens beträgt im fertigen Gel etwa 1 bis 50 Gew.-%. Der Anteil an Gelbildner beträgt etwa 0,5 bis 30 Gew.-%. Der Anteil an üblichen Hilfsmitteln beträgt zwischen 0 und etwa 10 Gew.-%, der Gehalt an wasserunlöslichem Lösungsmittel zwischen 0 und etwa 40 Gew.-%.

Das erfindungsgemäße Mittel besitzt überraschend vorteilhafte Eigenschaften. So zeichnet es sich durch hohe mechanische Stabilität aus, insbesondere wenn die kontinuierliche wäßrige Phase in ein hydrophiles organisches Gel eingebettet oder Bestandteil eines solchen Gels ist. Durch eine zusätzliche Umhüllung der diskreten Teilchen wird die mechanische Stabilität noch erhöht. Hierdurch, sowie durch die mögliche Ankopplung der komplexierenden Agentien an hydrophobe Trägerstoffe kann die Gefahr einer Kontamination der zu behandelnden wäßrigen Lösung mit komplexierendem Agens vermieden werden.

Ein entscheidender Vorteil ist ferner, daß der Ionentransport durch das jeweils vorliegende Kern-und

Hüllmaterial durch Wasser erfolgt, das die Diffusion der Ionen durch Kanäle, Makro- und Mikroporen zu den komplexierenden Agentien ermöglicht. Die große Austauschfläche zwischen dem komplexierenden Agens und der die abzutrennenden Kationen transportierenden kontinuierlichen wäßrigen Phase führt zu hoher Effektivität der erfindungsgemäßen Mittels unter Erhalt der Selektivität bei gleichzeitig einfacher Handhabung.

Im folgenden wird die Herstellung der erfindungsgemäßen, zur selektiven Abtrennung von Metallionen aus wäßrigen Lösungen geeigneten Mittel beschrieben.

Das Verfahren zur Herstellung des erfindungsgemäßen Mittels ist dadurch gekennzeichnet, daß man

a) ein komplexierendes Agens in einer wäßrigen Phase dispergiert, welche ein Vernetzungsmittel, eine durch ein Vernetzungsmittel vernetzbare Vorstufe eines hydrophilen Gels oder eine thermisch vernetzbare Vorstufe eines hydrophilen Gels enthält

b) zur Bildung von Teilchen aus der unter a) erhaltenen Dispersion

b1)die ein Vernetzungsmittel enthaltende Dispersion zur Verkapselung mit einer im wesentlichen wasserunlöslichen, ionenpermeablen Hülle in eine Lösung einbringt, die eine durch das Vernetzungsmittel vernetzbare Gelvorstufe eines wasserunlöslichen, ionenpermeablen Hüllmaterials enthält, oder

b2)die eine durch Hitze thermisch vernetzbare oder durch Kälte thermisch vernetzbare Vorstufe eines hydrophilen Gels enthaltende Dispersion zur Ausbildung diskreter Gelteilchen in eine flüssige Phase einbringt, welche eine zur thermischen Vernetzung der Gelvorstufe ausreichend hohe Temperatur besitzt, oder eine zur thermischen Vernetzung der Gelvorstufe ausreichend tiefe Temperatur besitzt oder

b3)die eine durch Vernetzungsmittel vernetzbare Vorstufe eines hydrophilen Gels enthaltende Dispersion in eine das Vernetzungsmittel enthaltende Lösung einbringt oder das Vernetzungsmittel in die Dispersion einarbeitet

und gegebenenfalls

c) die erhaltenen Teilchen mit einer im wesentlichen wasserunlöslichen ionenpermeablen Hülle beschichtet und/oder eine die Teilchen umgebende Hülle aus einem nicht kovalent vernetzten, aminogruppenhaltigen Hüllmaterial durch zusätzliche kovalente Vernetzung verstärkt.

Die Dispersion des komplexierenden Agens in der wäßrigen Phase kann nach an sich bekannten Methoden zur Erzeugung einer Dispersion, also einer Suspension von festen Agentien oder einer Emulsion, von festen bzw. flüssigen Stoffen in einer wäßrigen Phase erfolgen. In fester Form vorliegende Komplexierungsmittel werden vorzugsweise als Teilchen mit einer Größe zwischen 0,1 bis 500 µm eingesetzt. In flüssiger Form vorliegende, gegebenenfalls in wasserunlöslichen Lösungsmitteln gelöste Komplexierungsmittel werden beispielsweise durch hochdrehende Rührer (Turborührer) zu einer Emulsion verarbeitet, worin die emulgierten Teilchen einen Durchmesser von etwa 0,2 bis etwa 50 µm besitzen.

Sofern die Herstellung der Teilchen nach der Verfahrensvariante b1) erfolgen soll und/oder die Teilchen gemäß Verfahrensstufe c) mit einer Hülle umgeben werden sollen, können der Dispersion in Stufe a) anorganische oder organische Vernetzungsmittel zugesetzt werden. Die Wahl des Vernetzungsmittels richtet sich nach den verwendeten Gelbildnern für das Hüllmaterial.

Aus der Gruppe der anorganischen Vernetzungsmittel sind zu nennen Tripolyphosphate und Hexacyanoferrate, die ionotrope Gelbildner vernetzen, welche z.B. $NH_3^+$-Gruppen besitzen, also kationisch funktionalisiert sind. Ferner sind Salze zu nennen, vorzugsweise Salze von Metallen der 2. und 3. Hauptgruppe, insbesondere Calciumsalze, sowie gegebenenfalls Kalium- oder $NH_3$-Salze, wobei jeweils die Chloride bevorzugt sind. Derartige Salze sind Vernetzungsmittel für ionotrope Gelbildner, die als funktionelle Gruppen Oxosäurereste, z.B. die Carboxyl-, Phosphonyl-oder Sulfongruppe enthalten, also anionisch funktionalisiert sind, wie beispielsweise Alginate oder Pektate. Ferner sind Säuren, z.B. HCl, zu erwähnen, welche anorganische Gelbildner, z.B. Wasserglas oder Aluminate vernetzen, aber auch anionisch funktionalisierte ionotrope Gelbildner, z.B. Alginate oder Pektate.

Auch Salze, welche selbst Vorstufen von hydrophilen vernetzten Gelen darstellen, beispielsweise Aluminate, z.B. Natriumaluminat, oder lösliche Silikate, z.B. Wasserglas, können gleichzeitig auch Vernetzungsmittel für das Hüllmaterial wirksam sein.

Auch die bereits vorstehend beschriebenen ionotropen Gelbildner, die ihrerseits Vorstufen von organischen, hydrophilen vernetzten Gelen darstellen, können andererseits auch als Vernetzungsmittel zur Herstellung von durch Vernetzung von unterschiedlichen Gelbildnern miteinander entstehendem Hüllmaterial dienen. Hierbei wirken kationisch funktionalisierte ionotrope Gelbildner, z.B. Chitosan, als Vernetzungsmittel für anionisch funktionalisierte ionotrope Gelbildner, z.B. Alginat, und umgekehrt.

Anorganische oder organische Vernetzungsmittel, die eine kovalente Vernetzung von Gel-Vorstufen bewirken, könne ebenfalls eingesetzt werden. Hierzu gehören die dem Fachmann an sich bekannten Mittel, welche eine Polymerisation, Polyaddition oder Polykondensation von Vorstufen unter Bildung eines hydrophilen kovalent vernetzten Gels bewirken. Falls als Gelbildner für das Hüllmaterial ein Polyurethan-Prepolymer eingesetzt wird, kann das Wasser selber, gegebenenfalls unter Einwirkung von Reaktionsbeschleunigern, als Vernetzungsmittel wirken.

Beispiele für organische Vernetzungsmittel, die eine kovalente Vernetzung bewirken, sind Verbindungen, welche aminvernetzende funktionelle Gruppen besitzen. Derartige Gruppen sind beispielsweise die Aldehyd-, Isocyanat-, Thioisocyanat- oder Azogruppe. Vorzugsweise werden difunktionelle Vernetzungsmittel verwendet, welche wasserlöslich sind, mit Wasser jedoch nicht oder nur langsam reagieren. Insbesondere verwendet man Diisocyanate, z.B. Tolyldiisocyanat, oder Dialdehyde, z.B. Glutardialdehyd.

Sofern die Herstellung der Teilchen nach Verfahrensvariante b2) oder b3) erfolgen soll, wird der Dispersion in Stufe a) einer der vorstehend beschriebenen Gelbildner zugesetzt.

In Stufe b) bildet man Teilchen aus der unter a) erhaltenen Dispersion.

Sofern die Dispersion ein Vernetzungsmittel enthält, wird sie nach Stufe b1) zur Verkapselung mit einer im wesentlichen wasserunlöslichen ionenpermeablen Hülle in eine Lösung eingebracht, die eine durch das Vernetzungsmittel vernetzbare Gelvorstufe eines wasserunlöslichen ionenpermeablen Hüllmaterials enthält. Als Lösung wird vorzugsweise eine wäßrige Lösung verwendet. Das Einbringen kann beispielsweise durch Eintropfen oder Einspritzen erfolgen.

Bevorzugte Kombinationen von Vernetzungsmittel/organischer vernetzbarer Vorstufe sind Salz/ionotroper Gelbildner sowie kationisch (anionisch) vernetzbarer ionotroper Gelbildner/anionisch (kationisch) vernetzbarer ionotroper Gelbildner.

Sofern die Dispersion eine durch Hitze thermisch vernetzbare oder durch Kälte thermisch vernetzbare Vorstufe eines hydrophilen Gels enthält, wird sie zur Ausbildung diskreter Gelteilchen nach Stufe b2) in eine flüssige Phase eingebracht, welche eine zur thermischen Vernetzung der Gelvorstufe ausreichend hohe Temperatur besitzt, oder welche eine zur thermischen Vernetzung der Gelvorstufe ausreichend tiefe Temperatur besitzt. Das Einbringen kann beispielsweise durch Eintropfen oder Einspritzen erfolgen. Sofern man eine durch Kälte vernetzbare Gelvorstufe einsetzt, verwendet man beispielsweise aliphatische Kohlenwasserstoffe, z.B. Hexan, oder Kohlenwasserstoffgemische wie Kerosin, vorzugsweise jedoch Wasser. Sofern man eine durch Hitze vernetzbare Gel-Vorstufe einsetzt, verwendet man einer höher siedenden wasserunlöslichen organischen Kohlenwasserstoff, z.B. Kerosin, oder Silikonöle.

Die zur Vernetzung ausreichend hohe Temperatur ist von der jeweiligen Gelvorstufe abhängig und dem Fachmann bekannt. Für Curdlan ist sie beispielsweise etwa 65 ° C. Vorzugsweise führt man die thermische Vernetzung jedoch bei einer Temperature, die wesentlich höher liegt als die zur Vernetzung gerade noch ausreichende Temperatur, beispielsweise bei einer etwa 15 ° C bis 60 ° C höheren Temperatur, durch.

Als ausreichend tiefe Temperatur bei durch Kälte thermisch vernetzbaren Gelen wird eine Temperatur angesehen, die mindestens 15 ° C tiefer liegt als die Temperatur, bei der das Gel in den Lösungszustand übergeht. Die Temperatur, bei der dieser Übergang erfolgt, ist vom jeweiligen Gel abhängig und dem Fachmann bekannt.

Sofern die in Stufe a) erhaltene Dispersion eine durch ein Vernetzungsmittel vernetzbare Vorstufe eines hydrophilen Gels enthält, bringt man die Dispersion nach Stufe b3) in eine das Vernetzungsmittel enthaltende Lösung ein oder arbeitet das Vernetzungsmittel in die Dispersion ein. Das Einbringen der Dispersion in die Lösung kann beispielsweise durch Eintropfen oder Einspritzen erfolgen und wird insbesondere dann durchgeführt, wenn als vernetzbare Vorstufe ein ionotroper Gelbildner eingesetzt wird. Das Einarbeiten des Vernetzungsmittels in die Dispersion kann beispielsweise durch inniges Vermischen erfolgen. Es kommt insbesondere dann in Betracht, wenn die Vernetzung eine Polyreaktion ist, also Polymerisation, Polyaddition oder Polykondensation.

Die in Stufe b1), b2) oder b3) erhaltenen Teilchen können gewünschtenfalls in Stufe c) mit einer im wesentlichen wasserunlöslichen, ionenpermeablen Hülle beschichtet und/oder eine die Teilchen umgebende Hülle aus einem nicht kovalent vernetzten aminogruppenhaltigen Hüllmaterial durch zusätzliche kovalente Vernetzung verstärkt werden.

Zur Beschichtung können sie beispielsweise mit einer vernetzungsmittelhaltigen Lösung kontaktiert, beispielsweise durch Eintauchen oder Besprühen. Anschließend kontaktiert man die derartige vorbehandelten Teilchen, z.B. wiederum durch Eintauchen oder Besprühen, mit einer Lösung, die eine durch das verwendete Vernetzungsmittel vernetzbare Gelvorstufe für das Hüllmaterial enthält. Durch die Reaktion zwischen Vernetzungsmittel und vernetzbarer Vorstufe entsteht die gewünschte Hülle.

Vorzugsweise kontaktiert man die Teilchen zuerst mit einer eine vernetzbare Gelvorstufe des Hüllmaterials enthaltenden Lösung und vernetzt diese vernetzbare Gelvorstufe anschließend. Die Vernetzung kann in bekannter Weise erfolgen. Je nach Art des verwendeten Gelbildners kann die Vernetzung z.B. in der vorstehend durch Gelbildung beschriebenen Weise durch thermisches Vernetzen oder durch Kontaktieren mit einem geeigneten Vernetzungsmittel durchgeführt werden.

Bevorzugt umhüllt man das Teilchen mit einem hydrophilen organischen ionotropen Gelbildner, beispielsweise durch Eintauchen in eine diesen enthaltende Lösung. Anschließend taucht man das Teilchen in ein geeignetes Vernetzungsbad.

Die Vernetzung der Gelvorstufe des Hüllmaterials kann auch durch die Diffusion eines im Teilchen enthaltenen Vernetzungsmittels an die Oberfläche ausgelöst werden.

Gewünschtenfalls kann man das Gel von Kern- und/oder Hüllmaterial zur Verstärkung chemisch modifizieren. Beispielsweise kann man kationisch vernetzte ionotrope Gele mit einer Säure kontaktieren und Gele erzeugen, welche die unlösliche freie Säure des verwendeten Gelmaterials enthalten. So kann Calciumalginatgel durch Säure in Alginsäuregel überführt werden.

Ferner kann man anionisch vernetzte ionotrope Gele mit einer Base kontaktieren und Gele erzeugen, welche die unlösliche freie Base des verwendeten Gelmaterials enthalten. So kann man mit Tripolyphosphat vernetztes, ammoniumgruppenhaltiges Chitosangel in freies unlösliches, amminogruppenhaltiges Chitosangel überführen.

Es besteht auch die Möglichkeit, anionisch vernetzte ionotrope Gele in schwerlösliche Derivate zu überführen. So kann mit Tripolyphosphat vernetztes Chitosangel durch Acetylierung in Chitingel überführt werden.

Schließlich können nicht kovalent vernetzte aminogruppenhaltige Gele zur zusätzlichen Verstärkung mit einem Vernetzungsmittel kontaktiert werden, welches Aminogruppen kovalent zu vernetzen vermag.

In einer bevorzugten Ausführungsform werden erfindungsgemäß erhaltene Teilchen mit aminogruppenhaltigen, nicht kovalent vernetztem Hüllmaterial zur zusätzlichen kovalenten Verstärkung der Hülle mit einem Vernetzungsmittel kontaktiert, welches Aminogruppen kovalent zu vernetzen vermag.

Das nicht kovalent vernetzte Hüllmaterial kann beispielsweise ein thermisch vernetztes Polypeptid, wie Gelatine oder ein mittels Anionen, z.B. Natriumtripolyphosphat, ionotrop vernetztes aminozuckerhaltiges Polysaccharid wie Chitosan sein. Von den bereits vorstehend beschriebenen Vernetzungsmitteln kommt insbesondere Glutardialdehyd in wäßriger Lösung in Frage. Das Kontaktieren kann beispielsweise durch Eintauchen oder Besprühen der Teilchen erfolgen.

Ein gelhaltiges umhülltes Teilchen kann in einem Schritt (= einstufig) hergestellt werden. Eine Variante zur einstufigen Herstellung eines gelhaltigen, umhüllten Teilchens ist dadurch gekennzeichnet, daß man eine in Stufe a) erhaltene Dispersion, welche eine vernetzbare Vorstufe des in dem Teilchen zu bildenden Gels enthält, und eine zweite Flüssigkeit, welche eine Gelvorstufe des Hüllmaterials enthält, derart gemeinsam in eine dritte Flüssigkeit eingibt, daß die Dispersion von der zweiten Flüssigkeit umgeben ist.

Dies kann dadurch geschehen, daß man in Stufe a) erhaltene Dispersion durch eine Düse eingibt, welche von einem die zweite Flüssigkeit zuführenden Rohr ungeben ist. Unter Eingeben wird insbesondere Eintropfen und Einspritzen verstanden.

In der Dispersion der Stufe a) und der zweiten Flüssigkeit können Gelvorstufen eingesetzt werden, die auf unterschiedliche Weise vernetzbar sind; die Kombination von durch Hitze vernetzbaren und durch Kälte vernetzbaren Vorstufen ist jedoch ausgeschlossen. Man kann beispielsweise in der Dispersion der Stufe a) eine durch ein Vernetzungsmittel vernetzbare Vorstufe und in der zweiten Flüssigkeit eine thermisch vernetzbare Vorstufe eines Gels vorsehen. Man kann beispielsweise auch in der Dispersion von Stufe a) eine thermisch vernetzbare Gelvorstufe und in der zweiten Flüssigkeit eine durch ein Vernetzungsmittel vernetzbare Gelvorstufe ein. Das Vernetzungsmittel kann dann in der dritten Flüssigkeit und/oder in der Dispersion von Stufe a) welche die thermisch vernetzbare Gelvorstufe enthält, enthalten sein.

Vorzugsweise verwendet man in der Dispersion der Stufe a) und in der zweiten Flüssigkeit Gelvorstufen, welche auf gleiche Weise vernetzen. So kann es sich jeweils um durch Hitze thermisch vernetzbare oder durch Kälte thermisch vernetzbare Vorstufen handeln. In diesem Fall ist die dritte Flüssigkeit eine zur thermischen Vernetzung ausreichend kalte bzw. ausreichend warme flüssige Phase. Man kann auch Gelvorstufen einsetzen, die durch ein Vernetzungsmittel vernetzen, insbesondere die bereits erwähnten ionotropen Gelbildner. In diesem Fall enthält die dritte Flüssigkeit ein entsprechendes Vernetzungsmittel.

Eine andere Variante zur einstufigen Herstellung von gelhaltigen, umhüllten Teilchen in einem Schritt ist besonders geeignet zur Herstellung von Teilchen, in welchen ein thermisch vernetztes Gel mit einer Hülle aus einem ionotrop vernetzten Gel umhüllt ist.

Diese Variante ist dadurch gekennzeichnet, daß man eine in Stufe a) erhaltenen Dispersion, welche eine thermisch vernetzbare Vorstufe des in dem Teilchen zu bildenden Gels und ein Vernetzungsmittel, welches ionotrope Gelvorstufen zu vernetzen vermag, in eine zur thermischen Vernetzung ausreichend kalte oder ausreichend warme wäßrige Lösung einer ionotrop vernetzbaren Gelvorstufe für das Hüllmaterial eingibt.

Das Eingeben kann beispielsweise durch Eintropfen oder Einspritzen erfolgen. Beim Eingeben der Dispersion in die wäßrige Lösung setzen die thermische Vernetzung und die ionotrope Vernetzung gleichzeitig ein. Es bilden sich dabei in einem Schritt diskrete, gelhaltige Teilchen, welche mit einem

ionotrop vernetzten und komplexbildnerfreien Gel umhüllt sind.

Verwendet werden können die bereits beschriebenen thermisch vernetzbaren bzw. ionotrop vernetzbaren Gelvorstufen sowie entsprechende Vernetzungsmittel. Vorzugsweise gibt man in die Dispersion der Stufe a) eine durch Kälte thermisch vernetzbare Vorstufe für das Gel, z.B. Agar, sowie ein anionisches Vernetzungsmittel für das Hüllmaterial, z.B. Natriumtripolyphosphat. Als ionotrop vernetzbare Gelvorstufe des Hüllmaterials verwendet man vorzugsweise ein aminozuckerhaltiges Polysaccharid. Das durch diese bevorzugte Ausführungsform des Herstellverfahrens erhaltene erfindungsgemäße Mittel besteht aus diskreten Teilchen mit thermisch vernetztem Kern und ionotrop vernetzter, aminogruppenhaltiger Hülle.

Gewünschtenfalls kann man die diskreten Teilchen zur Verstärkung der Hülle, wie bereits vorstehend beschrieben, chemisch modifizieren, insbesondere mit einem Vernetzungsmittel kovalent vernetzen. Die hierbei erhaltenen diskreten Teilchen besitzen einen thermisch vernetzten Kern und eine kovalent vernetzte Hülle.

Gewünschtenfalls kann man der kontinuierlichen wäßrigen Phase, die das komplexierende Agens dispergiert enthält, oder der die vernetzbaren Gelvorstufe des Hüllmaterials enthaltenden Lösung ein die Viskosität, die Dichte und/oder die Oberflächenspannung modifizierendes übliches Hilfsmittel zusetzen.

Die Zugabe von Hilfsmitteln, die die Viskosität verändern, insbesondere die Viskosität erhöhen, soll verhindern, daß die in Stufe a) erzeugte Dispersion in Stufe b) beim Vernetzen die gewünschte Form verliert. Die Einstellung der Viskosität ist besonders wichtig bei thermisch vernetzbaren Vorstufen. Die optimale Menge an viskositätserhöhenden Hilfsmitteln ist abhängig von der Temperatur der Dispersion. Sie kann durch gezielte Versuche jedoch leicht ermittelt werden.

Im folgenden werden die nachfolgend mit römischen Ziffern bezeichneten bevorzugten Varianten des Herstellverfahren näher ausgeführt. Hierbei werden im Anschluß an die allgemeine Arbeitsvorschift jeweils Randbedingungen hinsichtlich Bestandteilen und Konzentrationen in tabellarischer Form zusammengefaßt.

I Herstellung eines erfindungsgemäßen Mittels, in welchem die kontinuierliche wäßrige Phase von einer ionenpermeablen Hülle umhüllt ist.

II Herstellung eines erfindungsgemäßen Mittels, welches ein hydrophiles, nicht kovalent vernetztes Gel enthält.

III Herstellung eines erfindungsgemäßen Mittels, welches ein hydrophiles, kovalent vernetztes organisches Gel enthält.

IV Beschichten erfindungsgemäßer Teilchen mit einer im wesentlichen wasserunlöslichen, ionenpermeablen Hülle.

V Einstufiges Verfahren zur Herstellung eines gelhaltigen und mit einer ionenpermeablen Hülle versehenen erfindungsgemäßen Mittels.

VI Verfahren zur Verstärkung eines nicht kovalent vernetzten Hüllmaterials durch überführen in ein kovalent vernetztes Hüllmaterial.

Die so erhaltenen Teilchen können gewünschtenfalls zur weiteren Reinigung nochmals mit destilliertem Wasser abgespült werden und/oder nach Größe sortiert werden.

Bei der Beschreibung der einzelnen Varianten wird der allgemeine Begriff "Dispersion" sowohl für Suspensionen als auch für Emulsionen verwendet. Vorab wird die Herstellung derartiger Suspensionen und Emulsionen beschrieben.

A1) Herstellung von erfindungsgemäß einsetzbaren Suspensionen:

Die in fester Form vorliegenden Komplexierungsmittel werden, falls notwendig, zunächst vermahlen, beispielsweise in einer Schlagkreuzmühle mit Siebeinsätzen unterschiedlicher Größe, bis die Teilchengröße im Bereich 0,1 bis 500 µm liegt. Anschließend wird das erhaltene Pulver mit der flüssigen, die vernetzbare Vorstufe oder das Vernetzungsmittel enthaltenden wäßrigen Phase vermischt, wobei vor, während oder nach dem Vermischen übliche Hilfsmittel, beispielsweise $BaSO_4$ oder $TiO_2$ zur Erhöhung, Schaumglas oder Kerosin zur Erniedrigung der Dichte, ein Tensid oder ein Verdickungsmittel zugesetzt werden können. Die Vermischung erfolgt mit bekannten Vorrichtungen, beispielsweise mit Rührern.

A2) Herstellung einer Suspension, enthaltend das komplexierende Agens angekoppelt an ein hydrophobiertes Trägermaterial:

Das komplexierende Agens wird in einem organischen Lösungsmittel, z.B. Aceton, gelöst. Anschließend wird die Lösung mit hydrophobierten Trägermaterial, z.B. hydrophobierten Silica-Aerogel, in Kontakt gebracht, beispielsweise in einem Rührreaktor. Man kann die Lösung des Agens beispielsweise auch über das in eine Säule aufgebrachte Trägermaterial aufgeben. Das Gewichtsverhältnis von Agens zu Trägermaterial sollte im Bereich von etwa 0.5:1 bis 1,5:1, vorzugsweise bei etwa 1:1 liegen.

Das Lösungsmittel wird anschließend entfernt, und der erhaltene Feststoff wie unter A1) beschrieben weiterbehandelt.

B) Herstellung von Emulsionen:

Die in flüssiger Form vorliegenden, gegebenenfalls in wasserlöslichen Lösungsmitteln gelösten Komplexierungsmittel werden in der flüssigen, eine vernetzbare Gelvorstufe oder ein Vernetzungsmittel enthaltenden wäßrigen Phase emulgiert, gegebenenfalls unter Zusatz von modifizierenden Mitteln, beispielsweise Verdickungsmitteln und/oder Tensiden, und unter Verwendung von Rührern hoher Drehzahl, insbesondere Turborührer (Ultra-Turrax). Die bevorzugte Teilchengröße der emulgierten Bestandteile liegt zwischen etwa 0,2 und 50 $\mu$m.

Die Reihenfolge der Zugabe der vernetzbaren Gelvorstufe und der Zugabe von modifizierenden Mitteln ist nicht kritisch. Es besteht auch die Möglichkeit, zunächst eine konzentrierte Emulsion herzustellen, die gegebenenfalls die vernetzbare Gelvorstufe enthalten kann, und die erhaltene Emulsion durch anschließendes Verdünnen auf die gewünschte Konzentration zu bringen.

In einer Variante wird vor oder während des Herstellungsprozesses der Emulsion ein modifizierendes Mittel zugegeben. Beispielsweise kann die Zugabe von feinzermahlenem Schwerspat oder $TiO_2$ in einer Konzentration bis etwa 10 Gew.-%, beispielsweise von etwa 0,5 bis 10 Gew.-% der fertigen Dispersion, einem Emulgator bis etwa 3 Gew.-%, z.B. etwa 0,5 bis 3 Gew.-% oder einem Mittel zur Veränderung, insbesondere zur Erhöhung der Viskosität, beispielsweise Natriumalginat, Carrageenan, Natriumpektat, Carboxymethylcellulose etc. in einer Konzentration bis etwa 5 Gew.-%, beispielsweise von etwa von 0,5 bis 5 Gew.-%, vorzugsweise etwa 2 bis 2,5 Gew.-%, erfolgen. Hier ist anzumerken, daß einige der verwendeten Substanzen, beispielsweise die organischen ionotropen Gelbildner, aus Naturprodukten hergestellt werden und in ihren Eigenschaften (Viskosität, Gelierfähigkeit etc.) variieren können. Die Prozentangaben sind daher nur als ungefähre Werte zu verstehen.

I. Herstellung eines erfindungsgemäßen Mittels, in welchem die kontinuierliche wäßrige Phase von einer ionenpermeablen, wasserunlöslichen Hülle umschlossen ist.

In einer ersten Stufe a) wird in bereits beschriebener Weise eine Dispersion eines komplexierenden Agens, gegebenenfalls unter Zusatz weiterer modifizierender Mittel (Schwerspat, Tenside, viskositätserhöhende Mittel) in einer wässrigen Lösung eines Vernetzungsmittels hergestellt. Die hierbei erhaltene Lösung wird zur Verkapselung, entsprechend der Stufe b1) des Verfahrens, in eine Lösung getropft oder gespritzt, welche eine durch das Vernetzungsmittel vernetzbare Gelvorstufe enthält. Hierbei bildet sich an der Kontaktstelle zwischen Dispersionslösung und der die Gelvorstufe enthaltenden Lösung eine Hülle, und dementsprechend werden durch Hüllmaterial stabilisierte Tropfen oder Fäden erhalten. Nach einer Nachreaktionsphase von etwa 10 bis 20 Min. werden die gebildeten, diskreten Teilchen abgesiebt. Sie können direkt als solche verwendet werden oder einer weiteren Nachbehandlung, beispielsweise zur Verstärkung der Hülle, unterworfen werden.

Tabelle I — Mittel, in welchem die kontinuierliche wäßrige Phase von einer ionenpermeablen, wasserunlöslichen Hülle umschlossen ist

| Vorstufe der Hülle [Gew-%] 1) | kontinuierliche wäßrige Phase: Vernetzungsmittel | Konz. [Gew.-%] 1) | Komplexierendes Agens | Konz. [Gew.-%] 1) | Hilfsmittel [Gew.-%] 1) |
|---|---|---|---|---|---|
| Kationisch vernetzbare ionotrope Gelbildner (0,5 bis 5) | $CaCl_2$, $BaCl_2$, $MgCl_2$ | 0,5 - 5 (vorzugsweise etwa 2) | suspendiert oder emulgiert, gewünschtenfalls gelöst in einem Lösungsmittel, z.B. Mineralöl oder Kerosin, oder angekoppelt an hydrophobiertes Trägermaterial | 1 - 50 (vorzugsw. 10 - 25) | Dichte modifizierende Mittel ($BaSO_4$, $TiO_2$, Schaumglas) 0 - 10 |
| | Anionisch vernetzbare Gelbildner (Chitosan) | 0,1 - 2 | | | Emulgator 0 - 3 |
| Anionisch vernetzbare Gelbildner, z.B. Chitosan (0,5 bis 5) | Kationisch vernetzbare organ. Gelbildner (Alginate) | 0,1 - 2 | | | hydrophobiertes vermahlenes Silikatmaterial zur Ankopplung 0 - 25 |
| | Natriumtripolyphosphat, K oder Natriumhexacyanoferrat (II), (III) | 0,2 - 4 | | | Viskositätsmodifizierende Mittel 0 - 5<br>Lösungsmittel 0 - 25 |

1) = bezogen auf das Gesamtgewicht der 40 - 90 Gew.-% Wasser enthaltenden Teilchen

II. Herstellung eines erfindungsgemäßen Mittels, dessen Teilchen ein hydrophiles, nicht kovalent vernetztes Gel enthalten.

In Stufe a) wird zunächst wie vorstehend beschrieben eine wässrige Dispersion des betreffenden komplexierenden Agens hergestellt, welche einen vernetzbaren Gelbildner sowie gegebenenfalls weitere

modifizierende Mittel enthält.

In Stufe b) werden aus der in Stufe a) erhaltenen Dispersion Teilchen gebildet.

Hierzu wird entweder nach der Stufe b2) eine thermische Vernetzung vorgenommen oder nach Stufe b3) eine Vernetzung der Gelvorstufe durch ein Vernetzungsmittel bewirkt, wobei als Vernetzungsmittel Säuren, Basen oder Salze verwendet werden.

II.1. Bildung hydrophiler, nicht kovalent vernetzter organischer Gele durch Temperaturänderung.

Die thermisch vernetzbaren Gelbildner umfassen die durch Hitze, also durch Temperaturerhöhung vernetzbaren und die durch Kälte, also durch Temperaturerniedrigung vernetzbaren Gelbildner. Aus der ersten Gruppe sind vor allem Gelatine, Agar und Agarose zu nennen, während ein Beispiel der zweiten Gruppe Curdlan ist.

II.1.a) Vernetzung durch Temperaturerniedrigung

Gelatine (10 bis 30 Gew.-%), Agar oder Agarose (etwa 0,5 bis 4 Gew.-%) werden in Wasser gegeben, das komplexierende Agens in der wäßrigen Phase dispergiert und dieser gegebenenfalls weitere modifizierende Mittel, insbesondere viskositätserhöhende Mittel, z.B. Carboxymethylcellulose (etwa 0,2 bis 5 Gew.-%) zugegeben. Man erwärmt auf etwa 40 bis 80 °C und tropft oder spritzt in kaltes Wasser, z.B. von etwa 15 °C. Hierbei bilden sich feste, diskrete Teilchen.

II.1.b) Vernetzung durch Temperaturerhöhung

Man suspendiert Curdlan (2 bis 15 Gew.-%) in Wasser, dispergiert das komplexierende Agens und fügt gegebenenfalls übliche Hilfsmittel zu. Dann erwärmt man, bis sich das Curdlan löst, jedoch nicht höher als etwa 60 °C, und tropft dann in heißes Öl, z.B. Mineralöl oder Silikonöl (Temperatur etwa 80 bis 120 °C). Es bilden sich sofort feste Teilchen, die abgespült und verwendet werden können.

II.2. Gelieren durch Säure oder Base

Durch Säure (pH-Erniedrigung) gelierbare anorganische Gelbildner sind z.B. lösliche Silikate, insbesondere Wasserglas, Aluminate, insbesondere Natriumaluminat, und kationisch vernetzbare ionotrope Gelbildner, insbesondere Natrium-Alginat oder Natrium-Pektat. Durch Base (pH-Erhöhung) gelierbare anorganische Gelbildner sind gelierbare Metallsalze, z.B. $SiCl_4$ oder $AlCl_3$. Durch Base vernetzbare organische Gelbildner sind anionisch vernetzbare ionotrope Gelbildner, insbesondere Chitosan.

Zunächst wird die den Gelbildner und das komplexierende Agens enthaltende wäßrige Dispersion erzeugt. Falls Chitosan als Gelbildner verwendet wird, kann dessen Auflösung in der Dispersion in an sich bekannter Weise durch Säurezusatz, z.B. Essigsäure unterstützt werden.

Zur Ausbildung des Gels wird die fertige Dispersion in eine wäßrige Lösung einer Säure, beispielsweise Salzsäure (etwa 1-normal) bzw. in eine wäßrige Lösung einer Base, insbesondere Natronlauge (etwa 1-normal) eingeführt. Hierbei werden die gewünschten, teilchenförmigen Mittel erhalten. Je nach Vorgehensweise lassen sich perlförmige oder fadenförmige Teilchen herstellen. Durch Zutropfen der gelierbaren Dispersion in die Säure bzw. Base werden beispielsweise perlförmige Teilchen erhalten, während beim Eindüsen Fäden erhalten werden. Durch Variation von Zutropfgeschwindigkeit, Tropfengröße, Einspritzgeschwindigkeit, Durchmesser der Einspritzdüse etc. lassen sich Durchmesser von Tropfen und Fäden auf das gewünschte Maß einstellen. Zur Vervollständigung des sofort einsetzenden Geliervorgangs können die diskreten Teilchen 30 Min. in der Säure bzw. Base verbleiben, wobei Geliervorgang und Nachreaktionsphase bevorzugt bei Raumtemperatur erfolgen. Anschließend werden die diskreten Teilchen aus der Säure bzw. Base entnommen, z.B. durch Absieben, und mit Wasser gespült. Die erhaltenen Teilchen können direkt verwendet werden oder einer Nachbehandlung unterworfen, z.B. mit einer zusätzlichen ionenpermeablen Hülle umgeben werden.

Tabelle II. 1. Mittel, enthaltend temperaturvernetzte Gele

| Gelbildner | Konz. [Gew.-%][1] | Komplexierendes Agens | Konz. [Gew.-%][1] | Hilfsmittel | Konz. [Gew.-%][1] |
|---|---|---|---|---|---|
| Gelatine | 10 bis 30 | suspendiert oder emulgiert, gewünschtenfalls gelöst in einem Lösungsmittel, z.B. Mineralöl | 1 bis 30 vorz. 10 bis 25 | Dichte erhöhende Mittel (z.B. $BaSO_4$ oder $TiO_2$) | 0 bis 10 |
| Agar | 0,5 bis 4 | oder Kerosin, oder angekoppelt an hydrophobiertess Trägermaterial | | Dichte erniedrigende Mittel, z.B. Kerosin oder Schaumglas | 0 bis 10 |
| | | | | Lösungsmittel | 0 bis 40 |
| Agarose | 0,5 bis 4 | | | Emulgator | 0 bis 3 |
| Curdlan | 2 bis 15 | | | Trägerstoff | 0 bis 25 |

[1] = bezogen auf das Gesamtgewicht der 40 - 90 Gew.-% Wasser enthaltenden Teilchen

Tabelle II. 2. Mittel, enthaltend durch Säure oder Base gelierte Gele

| Gelbildner | Konz. [Gew.-%][1)] | Komplexierendes Agens | Konz. [Gew.-%][1)] | Hilfsmittel | Konz. [Gew.-%][1)] | Vernetzungsmittel |
|---|---|---|---|---|---|---|
| Wasserglas | 2 bis 36 | suspendiert oder emulgiert, gewünschtenfalls gelöst in einem Lösungsmittel, z.B. Mineralöl oder Kerosin, oder angekoppelt an hydrophobiertes Trägermaterial | 1 - 30 vorzugsw. 10 - 25 | Dichte erhöhende Mittel (z.B. $BaSO_4$ oder $TiO_2$) | 0 - 10 | etwa 1 n HCl |
| Natriumaluminat | 2 bis 40 | | | Dichte erniedrigende Mittel z.B. Schaumglas | 0 - 10 | |
| | | | | Lösungsmittel | 0 - 40 | |
| Natriumsalze ionotroper organischer Gelbildner | 0,5 bis 6 | | | Emulgator | 0 - 3 | |
| | | | | Trägerstoff | 0 - 25 | |
| aminozuckerhaltiges Polysaccharid, z.B. Chitosan | 0,5 bis 4 | | | | | etwa 1 n NaOH |

[1)] = bezogen auf das Gesamtgewicht der 40 - 90 Gew.-% Wasser enthaltenden Teilchen

II.3. Gelieren durch Vernetzen mit einem Salz

Bevorzugte ionotrope Gelbildner, die durch Salze mit zur Vernetzung geeigneten Kationen bzw. Anionen vernetzt werden, sind die löslichen Verbindungen, insbesondere die Natriumsalze von Polysacchariden, die beispielsweise mit der Carboxyl-, Sulfonyl- oder Phosphonylgruppe substituiert sind, wie Alginat, Pektat,

Carboxymethylcellulose, Phosphoguargum, Carrageenan, Cellulosesulfat; oder aber aminozuckerhaltige Polysaccharide wie Chitosan.

Im ersten Schritt wird die eine vernetzbare Gelvorstufe enthaltende Dispersion des komplexierenden Agens hergestellt. Die bevorzugte Vorgehensweise besteht darin, in das vorzugsweise entionisierte Wasser den Gelbildner zu geben und aufzulösen und gegebenenfalls modifizierende Mittel zuzufügen. Bei Verwendung von Chitosan wird die Auflösung in an sich bekannter Weise durch Zusatz von Säure, z.B. Essigsäure, unterstützt. In dieser wäßrigen lösung wird anschließend in beschriebener Weise das komplexierenden Agens dispergiert. Sofern Gemische von Gelbildnern eingesetzt werden, sind Kombinationen von Chitosan mit den anderen, oben beschriebenen Gelbildnern jedoch ausgeschlossen. Das Bilden von Teilchen erfolgt durch Eintropfen oder Einspritzen, z.B. über eine Düse, in eine das Vernetzungsmittel enthaltende Flüssigkeit. Sofern als Gelbildner Chitosan vorliegt, tropft man in eine wässrige Lösung, welche Alkalipolyphosphat, Kalium-oder Natriumhexacyanoferrat (II) oder (III) enthält. Sofern die anderen vorstehend erwähnten Gelbildner (außer Chitosan) vorliegen, tropft oder spritzt man die gelierbare Flüssigkeit vorzugsweise in eine, ein Salz mehrwertiger Kationen, insbesondere Erdalkali-, insbesondere bevorzugt Ca-Salze, z.B. $CaCl_2$, enthaltende wässrige Lösung. Die im Vernetzungsbad gebildeten Perlen oder Fäden können zur Vervollständigung der Vernetzung noch etwa 30 min, im Vernetzungsbad mit Hilfe eines hängenden Rührers gerührt werden. Sodann werden die Teilchen vom Vernetzungsbad abgetrennt und mit Wasser abgespült. Sie können anschließend ihrer Verwendung zugeführt oder in einer weiteren Behandlungsstufe mit einer ionenpermeablen Hülle versehen werden.

II.4. Gelieren durch Vermischen zweier gelierbarer Flüssigkeiten

In einer weiteren Variante zur Herstellung des erfindungsgemäßen Mittels werden zwei je eine gelierbare Gelvorstufe enthaltende Flüssigkeiten, die bei gegenseitiger Durchmischung ein Gel bilden, vereinigt und in ein Formöl gegeben, wobei diskrete Teilchen erhalten werden. Bevorzugt handelt es sich hier um Flüssigkeiten, von denen die eine Wassergaslösung, die andere eine Natriumaluminatlösung ist. In einem ersten Schritt werden, z.B. wie in der DE-OS 29 17 313 beschrieben, eine Wasserglaslösung und eine Aluminatlösung hergestellt und in einer oder auch in beiden Lösungen in beschriebener Weise komplexierenden Agens, gegebenenfalls unter Zugabe weiterer modifizierender Mittel, dispergiert. Die beiden Lösungen werden sodann intensiv miteinander vermischt und unmittelbar nach Beginn des Mischvorgangs, d.h. innerhalb weniger Sekunden, in ein Formöl eingetropft oder eingedüst. Unter Formöl werden alle mit Wasser nichtmischbaren Flüssigkeiten verstanden, insbesondere Mineralöle. Die erhaltenen Perlen oder Fäden werden abgesiebt und mit Wasser gewaschen. Sie können als solche verwendet werden oder gewünschtenfalls in einer Nachbehandlungsstufe mit einer ionenpermeablen Hülle versehen werden.

Tabelle II 3/4 Mittel, enthaltend durch Salze oder andere Gelbildner vernetzte Gele

| Gelbildner | Konz. [Gew.-%] 1) | Vernetzungsmittel | Komplexierendes Agens | Konz. [Gew.-%] 1) | Hilfsmittel [Gew.-%] 1) |
|---|---|---|---|---|---|
| Natriumsalze der organischen ionotropen Gelbildner | 0,5 - 6 vorzugsw. 3 - 4 | $CaCl_2$, $BaCl_2$, $MgCl_2$ (jeweils 0,5 - 4 %ige, vorz. 2 % Lsg. in Wasser) | suspendiert oder emulgiert, gewünschtenfalls gelöst in einem Lösungsmittel, z.B. Mineralöl oder Kerosin, oder angekoppelt an hydrophobiertes Trägermaterial | 1 - 30 vorzugsw. 10 - 25 | Dichte erhöhende Mittel (z.B. $BaSO_4$, $TiO_2$) (0 - 10)<br>Dichte erniedrigende Mittel (z.B. Schaumglas) (0 - 10)<br>Emulgator (0 - 3)<br>viskositätserhöhende Mittel (0 - 5)<br>Trägerstoffe (0 - 25)<br>Lösungsmittel (0 - 40) |
| Chitosan | 0,5 - 4 vorzugsweise 1 - 1,5 | Natriumtripolyphosphat (2 Gew.-% in Wasser)<br>K- oder Na-Hexacyanoferrat (II), III, (4 Gew.-% in $H_2O$) | | | |
| Wasserglas | 10 - 30 | Natriumaluminat (8 -15 Gew.- % in $H_2O$) | | | |
| Natriumaluminat | 8 - 15 | Wasserglas (10 - 30 Gew.-% in $H_2O$) | | | |

1) = bezogen auf das Gesamtgewicht der 40 - 90 Gew.-% Wasser enthaltenden Teilchen

III. Herstellung eines erfindungsgemäßen Mittels, welches ein hydrophiles, kovalent vernetztes organisches Gel enthält.

Allgemein werden im ersten Schritt das komplexierende Agens sowie gegebenenfalls modifizierende

Mittel und ein Prepolymer des betreffenden Gels mit Wasser vermischt. Geeignete Prepolymere sind z.B. Acrylsäure, Acrylnitril, Acrylamid, Polyol/Diisocyanat-Gemische, Polyurethan-Prepolymer, etc. Die Polyreaktion wird in an sich bekannter Weise ausgelöst, durch Zugabe von Vernetzungsmitteln, Kettenstartern, Erwärmen, Zugabe von Härtern etc.

Beispielsweise wird im ersten Schritt das komplexierende Agens mit einer Menge von bis zu 40 Gew.-% in Polyurethan-Prepolymer, beispielsweise Hypol FHP 2000 der Fa. Grace, Lexington, und dem (gegebenenfalls entionisierten) Wasser vermischt, wobei gegebenenfalls dichtemodifizierenden Mittel wie Schwerspat bis 5 Gew.-% mit in die Mischung eingearbeitet werden. Nach 10 bis 20 Min. wird die fertige Mischung in eine Härterlösung, beispielsweise eine wäßrige 0,1 %ige Polyaminoamid-Härterlösung (XE 430 der Fa. Schering), getropft oder eingespritzt. Die hierbei entstehenden Tropfen, Stäbchen oder Fäden werden nach etwa 30 Min. aus der Härterlösung genommen und ausgehärtet. Nach etwa 10 bis 20 Stunden können die ausgehärteten, diskreten Teilchen verwendet oder einer Nachbehandlungsstufe zugeführt werden.

IV. Beschichten erfindungsgemäßen Teilchen mit einer im wesentlichen wasserunlöslichen ionenpermeablen Hülle

Die vorstehend beschriebenen, erfindungsgemäßen Mittel können nach ihrer Herstellung zur Abtrennung von Ionen aus wässrigen Lösungen eingesetzt werden.

Vorzugsweise werden sie jedoch nach ihrer Herstellung mit einer im wesentlichen wasserunlöslichen, ionenpermeablen Hülle umgeben. Diese vorzugsweise komplexbildnerfreie Hülle führt zu zusätzlicher Stabilität des diskreten Teilchens und verringert die Gefahr des Ausblutens.

Ein auf beliebige Weise hergestelltes teilchenförmiges Mittel kann mit einer Hülle umgeben werden, welche durch ein hydrophiles kovalent oder nicht kovalent vernetztes organisches Gel gebildet ist. Die Kombination verschiedener Teilchenmaterialien und Hüllmaterialien ist im allgemeinen nicht kritisch.

Variante A: Hydrophile, nicht kovalent vernetzte organische Hüllmaterialien

Diskrete Teilchen, die mit einem hydrophilen, vernetzten Hüllmaterial umhüllt sind, werden im allgemeinen hergestellt, indem das diskrete Teilchen in eine, die vernetzbare Gelvorstufe des Hüllmaterials enthaltende Flüssigkeit getaucht wird und die so auf das Teilchen aufgebrachte vernetzbare Vorstufe in an sich bekannter Weise vernetzt wird, beispielsweise durch Temperaturänderung oder Kontakt mit einem Vernetzungsmittel.

A a) Vernetzung durch Temperaturänderung:

Bevorzugte Gelvorstufen (Gelatine, Agar, Agarose, Curdlan), ihre Konzentration und das Vorgehen bei der Vernetzung sind analog zu der in II.1. beschriebenen Methode.

A b) Vernetzung durch ein Vernetzungsmittel:

Das diskrete Teilchen wird in eine, die vernetzbare Vorstufe enthaltende Flüssigkeit getaucht und anschließend in ein Vernetzungsbad gegeben. Die umgekehrte Reihenfolge ist ebenfalls möglich.

Das Eingeben der mit der vernetzbaren Gelvorstufe des Hüllmaterials in ein Vernetzungsbad kann unterbleiben, falls in den Teilchen bereits ein Vernetzungsmittel enthalten ist, und dieses durch Diffusion in das Hüllmaterial übertreten und die Vernetzung bewirken kann.

Diskrete Teilchen, deren Gel durch Vernetzen von ionotropen Gelbildnern z.B. Alginat, Pektat, Carboxymethylcellulose, Phosphoguargum, Carageenan und Cellulosesulfat mit Calciumchlorid hergestellt wurde, werden, gegebenenfalls nach Reinigen der Oberfläche durch Abspülen mit entionisiertem Wasser, Methanol, Ethanol etc., in eine wässrige Lösung getaucht, die einen oder mehrere der vorstehend beschriebenen Gelbildner in einer Gesamtkonzentration von etwa 0,1 bis 3 Gew.-% vorzugsweise 0,2 bis 0,8 Gew.-% enthalten. Calciumionen, die im Gel des teilchenförmigen Mittels enthalten sind, diffundieren in die Lösung des Gelbildners und bewirken die Ausbildung einer komplexbildnerfreien Gelhülle um das diskrete Teilchen.

In vergleichbarer Weise lassen sich Hüllen aus mit Säure vernetzbaren Gelvorstufen ohne zusätzliches Vernetzungsbad auf diskrete Teilchen aufbringen, die entsprechend saure Bestandteile enthalten.

Variante B) Hydrophile, kovalent vernetzte organische Hüllmaterialien

Hierbei wird zur Herstellung der Hülle das teilchenförmige Mittel in ein Prepolymer getaucht und in bekannter Weise der Vernetzung des Prepolymers ausgelöst. Beispielsweise wird das diskrete Teilchen in ein wasserhaltiges Polyurethanprepolymer der bereits beschriebenen Art, z.B. Hypol FHP 2000, getaucht, abgesiebt und in eine 0,1 %ige Polyaminoamid-Härterlösung getaucht. Nach Aushärten liegt ein mit einem hydrophilen, kovalent vernetzten Gel umhülltes diskretes Teilchen vor.

Bevorzugte Kombinationen von vernetzbaren Vorstufen und Vernetzungsmitteln sowie entsprechende Konzentrationsbereiche sind in der folgenden Tabelle IV zusammengestellt.

Tabelle IV Vorstufen und Vernetzungsmittel für Hüllmaterial

| Vernetzbare Vorstufen | Konz. [Gew.-%][1] | Vernetzungsmittel | Konz. [Gew.-%][1] | |
|---|---|---|---|---|
| Agar, Agarose<br>Gelatine | 0,5 - 4<br>10 - 30 | -<br>(Vernetzung durch Temperaturänderung) | - | Variante A a) |
| Kationisch vernetzte, org. ionotrope Gelbildner (Alginat etc.) in Wasser | 0,1 - 3 | $CaCl_2$ in Wasser | 0,5 - 5 (vorz. 2) | Variante A b) |
| | | $CaCl_2$ (aus Kernmaterial durch Diffusion in die gelbildnerhaltige Lösung) | - | |
| Anionisch vernetzbare, org. ionotrope Gelbildner (Chitosan) in Wasser | 0,5 - 5 | Natriumtripolyphosphat, K-, Na-Hexacyanoferrat (II), (III) | 0,2 - 4 | |
| | | Kationisch vernetzbare, org. ionotrope Gele (Alginat etc.) | 0,1 - 2 | |
| Prepolymer z.B. PU-Prep. Hypol FHP 2000 | ca. 80 | Wasser | ca. 20 | Variante B |

[1] = bezogen auf das Gesamtgewicht der 40 - 90 Gew.-% enthaltenden Teilchen

V. Einstufiges Verfahren zur Herstellung eines gelhaltigen und mit einer ionenpermeablen Hülle versehenen erfindungsgemäßen Mittels

Im folgenden werden Verfahrensvarianten beschrieben, bei denen das gelhaltige Teilchen (Kernmaterial)

und die umgebende Hülle in einem einstufigen Verfahren hergestellt werden können.

V a) Herstellung durch Umhüllen einer die Gelvorstufe des Kernmaterials enthaltenden Dispersion mit einer die Gelvorstufe für das Hüllmaterial enthaltenden zweiten Flüssigkeit und anschließendes Vernetzen durch Eingeben in eine dritte Flüssigkeit

Hierbei wird die, die vernetzbare Vorstufe des Gels und das komplexierende Agens dispergiert enthaltende wäßrige Dispersion vor der Gelierung oder Polymerisation der Gelvorstufe mit einer eine Gelvorstufe des Hüllmaterials enthaltenden Flüssigkeit umgeben. Eine Durchmischung der beiden Flüssigkeiten kann durch Einstellen unterschiedlicher Viskosität vermieden werden.

In einer bevorzugten Ausführungsform sind Gelvorstufen des Kernmaterials und die Gelvorstufen des Hüllmaterials auf gleiche Weise vernetzbar. Diese Ausführungsform ist für die hydrophilen, nicht kovalent vernetzbaren, organischen Gelvorstufen, insbesondere ionotrope Gelbildner, als Kern-und Hüllmaterial geeignet. Durch eine geeignete Vorrichtung, beispielsweise eine Düsenanordnung mit zentraler Austrittsöffnung für die die Gelvorstufe des Kernmaterials enthaltende Dispersion und einer darum konzentrisch angeordneten Austrittsöffnung für die die Gelvorstufe für das Hüllmaterial enthaltende Flüssigkeit kann z.B. ein Gebilde bestehend aus Kerndispersion, umgeben von der Hüllflüssigkeit, in ein Vernetzungsbad eingebracht werden. Die Vernetzung erfolgt in bekannter Weise.

Für die besonders bevorzugte Ausführungsform unter Verwendung ionotroper Gelbildner sind in Tabelle Va Konzentrationsangaben angegeben. Die Konzentration komplexierender Agentien und Hilfsmittel ist analog Tabelle II 3/4.

Tabelle V a Einstufiges Verfahren zur Herstellung von umhüllten, gelhaltigen Teilchen

| Vorstufe Kernmaterial | Konz. [Gew.-%][1)] | Vorstufe Hüllmaterial | Konz. [Gew.-%][1)] | Vernetzungsmittel |
|---|---|---|---|---|
| Kationisch vernetzbare, org. ionotrope Gelbildner (Alginat, Pektat etc.) in Wasser | 1 - 2 | wie Kernmaterial | 3 - 5 | $CaCl_2$ (2 Gew.-%) in Wasser |
| anionisch vernetzbare, org. ionotrope Gelbildner (Chitin, Chitosan) | 0,5 - 1 | wie Kernmaterial | 1,5 - 3 | Tripolyphosphat K-, Na-Hexacyanoferrat (II), (III) 2 Gew.-% in $H_2O$ |

1) = bezogen auf das Gesamtgewicht der 40 - 90 Gew.-% Wasser enthaltenden Teilchen

V b) Einstufiges Verfahren zur Herstellung von umhüllten, gelhaltigen Teilchen mit thermisch vernetztem Kern und ionotrop vernetzter Hülle durch Eingeben einer ine thermische vernetzbare Gelvorstufe und ein Vernetzungsmittel enthaltenden Dispersion in eine eine ionotrop vernetzbare Gelvorstufe des Hüllmaterials enthaltende Flüssigkeit

Einer Dispersion eines komplexierenden Agens in Wasser wird eine thermisch vernetzbare, vorzugsweise durch Kälte thermisch vernetzbare Gelvorstufe, z.B. ein thermisch vernetzbares Polypeptid, z.B. Gelatine (10 bis 30 Gew.-%) oder vorzugsweise ein thermisch vernetzbares Polysaccharid, z.B. Agar oder Agarose (etwa 0,5 bis etwa 4 Gew.-%) gegebenenfalls die Teilcheneigenschaften modifizierende Mittel, beispielsweise viskositätserhöhende Mittel wie Carboxymethylcellulose, ferner ein Vernetzungsmittel, insbesondere ein zur Vernetzung von aminozuckerhaltigen Polysacchariden wie Chitosan geeignetes Vernetzungsmittel, beispielsweise ein Alkalitripolyphosphat oder Alkalihexacyanoferrat (II) oder (III) in einer Konzentration von etwa 0,2 bis etwa 4 Gew.-% zugegeben. Die erhaltene Lösung wird auf etwa 40 bis 80° C temperiert und in eine kalte wäßrige Lösung einer ionotrop vernetzbaren Gelvorstufe gespritzt oder getropft, insbesondere in eine etwa 0,1 bis etwa 5 Gew.-%ige, wäßrige Lösung eines aminozuckerhaltigen Polysaccharids, beispielsweise Chitosan. Infolge thermischer Vernetzung des Kernmaterials durch die Abkühlung und ionischer Vernetzung der Hülle werden diskrete Teilchen erhalten. Diese werden abgetrennt und gegebenenfalls mit Wasser gewaschen.

Sie können direkt als solche verwendet werden oder einer Nachbehandlung, beispielsweise zur Verstärkung der Hülle, unterworfen werden.

Tabelle V b) Einstufiges Verfahren zur Herstellung des umhüllten, gelhaltigen Mittels mit thermisch vernetztem Kern und ionotrop vernetzter Hülle

| Vorstufe Kernmaterial | Konz. [Gew.-%][1] | Vorstufe Hüllmaterial | Konz. [Gew.-%][1] |
|---|---|---|---|
| Gelatine oder | 10 - 30 | Chitosan[2] | 0,1 - 5 |
| Agar oder | 0,5 - 4 | | |
| Agarose | 0,5 - 4 | | |
| viskositätserhöhende Mittel (Carboxymethylcellulose) | 0,5 - 5 | | |
| Natriumtripolyphosphat oder Kaliumhexacyanoferrat | 0,2 - 4 | | |
| chelat. Agens | 1 - 30 | | |
| Emulgator | 0 - 3 | | |
| Lösungsmittel | 0 - 25 | | |
| Trägerstoff | 0 - 25 | | |

[1] = bezogen auf das Gesamtgewicht der 40 - 90 Gew.-% Wasser enthaltenden Teilchen

[2] 1%ige Essigsäure ad 100%

VI. Verfahren zur Verstärkung eines nicht kovalent vernetzten Hüllmaterials durch Überführen in ein kovalent vernetztes Hüllmaterial

Hierbei wird eine bereits vorliegende Hülle aus einem aminogruppenhaltigen nicht kovalent vernetzten Gel, welches beispielsweise durch Vernetzung von aminozuckerhaltigen Polysacchariden, beispielsweise Chitosan, mit anionischen Vernetzungsmitteln, z.B. Natriumpolyphosphat oder Kaliumhexacyanoferrat (II) oder (III), erhalten wurde, mit einem weiteren Vernetzungsmittel, welches zwei oder mehrere zur Vernetzung von Aminogruppen geeignete funktionelle Gruppen, z.B. Aldehyd-oder Isocyanatgruppen, besitzt, in Kontakt gebracht, z.B. durch Eintauchen. Ein gut geeignetes Vernetzungsmittel ist Glutardialdehyd in wäßriger Lösung. Die Konzentration dieser Lösung kann zwischen etwa 0,1 und 50 Gew.-% betragen.Die Überführung der nicht kovalenten Vernetzung in eine kovalente Vernetzung ist selbst bei Raumtemperatur schon nach etwa 15 bis 180 min beendet. Der Grad der Vernetzung kann durch Variierung der Vernetzungsmittelmenge beeinflußt werden.

Je nach Art des verwendeten komplexierenden Agens kann das erfindungsgemäße Mittel verwendet werden, um eine Vielzahl von Metallkationen aus wässrigen Lösungen selektiv zu entfernen.

Abtrennbar sind komplexierbare Kationen der Hauptgruppenmetalle, beispielsweise Blei oder Zinn, ferner alle Kationen der Nebengruppenmetalle, beispielsweise Kationen von Vanadium, Chrom, Mangan, Eisen, Kobalt, Nickel Quecksilber, Cadmium und Kupfer sowie die Edelmetalle Silber und Gold und die Metalle der Platingruppe, beispielsweise Pd, Pt.

Aufgrund der Selektivität des erfindungsgemäßen Mittels eröffnet sich die Möglichkeit, gezielt bestimmte Kationen aus Stoffgemischen durch Verwendung entsprechend selektiver komplexierender Agentien abzutrennen.

Das erfindungsgemäße Mittel kann verwendet werden, um gesundheitsschädliche oder korrosiv wirkende unerwünschte Metallionen aus wäßrigen Lösungen abzutrennen.

Das erfindungsgemäße Mittel kann auch verwendet werden, um den Gehalt wertvoller Metalle aus wässrigen Lösungen zu gewinnen oder rückzugewinnen. So kann beispielsweise der Metallkationengehalt des Abstroms katalytisch behandelter Abwässer, von Abwässern aus Galvanikbädern oder aus Edelmetall-Laugereiverfahren abgetrennt und einer Wiederverwendung zugeführt werden.

Verfahren zur Abtrennung von Kationen aus wäßrigen Lösungen durch das erfindungsgemäße Mittel können batchweise, z.B. in Rührkesselreaktoren, oder kontinuierlich, z.B. in Strömungsreaktoren erfolgen.

Nach der Verwendung zur Abtrennung von Metallkationen kann das mit komplexierten Metallkationen beladenen Mittel beispielsweise in eine Deponie überführt werden.

Vorzugsweise regeneriert man das mit komplexierten Metallkationen beladene Mittel. Vorteilhaft ist, daß nach der Regenerierung das von Metallkationen im wesentlichen befreite teilchenförmige Mittel erneut zur Abtrennung von Metallkationen verwendet werden kann.

Dem Fachmann sind nicht nur die komplexierenden Agentien an sich, sondern auch die Art und Weise ihrer Regenerierung aus Metallkomplexen bekannt. Auf die gleiche, an sich bekannte Art und Weise kann auch das, mit Metallkationen beladene, das komplexierende Agens dispergiert enthaltende erfindungsgemäße Mittel regeneriert werden.

Beispielsweise ist von sauren, mit komplexierten Metallkationen beladenen Agentien, z.B. Hydroxychinolinen oder Hydroxyoximen, bekannt, daß sie durch Behandeln mit wäßrigen Lösungen mit niedrigem pH-Wert, beispielsweise mit 0,1 bis 4 normaler Säure, regeneriert werden können. Entsprechend kann ein mit komplexierten Metallkationen beladenes erfindungsgemäßes Mittel, welches als komplexierendes Agens Hydroxychinoline oder Hydroxyoxime dispergiert enthält, ebenfalls durch wäßrige Lösung mit niedrigem pH-Wert regeneriert werden.

Gewünschtenfalls können die abgetrennten Metallkationen, insbesondere von wertvollen Metallen wie Edelmetallen, aus der sauren Lösung in an sich bekannter Weise isoliert und aufgearbeitet werden.

Die folgenden Beispiele sollen die Erfindung näher erläutern, ohne sie in ihrem Umfang einzuschränken.

Beispiel 1

Herstellung von das komplexierende Agens in der wäßrigen Phase suspendiert enthaltenden ionotrop vernetzten Gelteilchen

Als komplexierendes Agens wurden in diesem Beispiel N,N-Di-n-butyl-N′-benzoylthioharnstoff sowie 7-(1-Methyl-4-ethyl-octyl)-8-hydroxychinolin (Kelex 100 $^{R}$, Schering AG), oder O,O-Dialkyldithiophosphorsäureester (HOE F 3541 $^{R}$,Hoechst AG), angekoppelt an ein hydrophobiertes Trägermaterial (Aerosil 805 $^{R}$, Degussa, ein mittels Octylsilyl-Gruppen hydrophobiertes Silica-Aerogel) eingesetzt.

1.1. Alginat-Gelteilchen, enthaltend an Trägermaterial angekoppeltes 7(1-Methyl-4-ethyl-octyl-)-8-hydroxychinolin (Kelex 100 $^{R}$)

1.1.a Ankopplung von Kelex 100 $^{R}$ an Trägermaterial

Zur Ankopplung an das Trägermaterial wurden 60 g Kelex 100 $^{R}$ in 350 ml Aceton gelöst und in einem Rundkolben mit 60 g Aerosil R 805 $^{R}$ verrührt. Das Lösungsmittel wurde im Vakuum entfernt und das erhaltene feste Produkt (Ausbeute: 119,6g) fein gepulvert.

1.1.b Herstellung von Alginat-Teilchen

In 300 g entionisiertem Wasser wurden 12 g Natriumalginat (Protanal LF 20/60 R) gelöst und mit 185 g Wasser verdünnt. In die fertige Lösung wurde das unter 1.1.a erhaltene Produkt unter Verwendung eines Turborührers (Ultra-Turrax) suspendiert. Die erhaltene Suspension wurde in eine 2 %ige Calciumchloridlösung getropft. Es bildeten sich sofort Gelperlen. Diese wurden noch 25 Minuten in dem Vernetzungsbad mit einem hängenden Rührer leicht gerührt und dann abgesiebt. Die erhaltenen Gelperlen wurden in einer 0,1 %igen $CaCl_2$-Lösung aufbewahrt.

1.2. Chitosan-Gelteilchen enthaltend an Trägermaterial angekoppeltes Kelex 100 R

Zunächst wurden wie unter 1.1.a) beschrieben, 60 g Kelex 100 R an 60 g Aerosil R 805 R angekoppelt.

In 300 ml einer etwa 1% wäßrigen Essigsäurelösung wurden 4,5 g Chitosan (High-Viskosity-Chitosan, Firma Protan Biopolymers) gelöst und mit etwa 185 ml Wasser verdünnt. In die fertige Lösung wurde das nach 1.1.a erhaltene fein gepulverte Produkt unter Verwendung eines Turbo-Rührers (Ultraturrax) suspendiert. Die erhaltene Suspension wurde in eine 2%ige Natriumtripolyphosphatlösung getropft. Die erhaltenen Perlen wurden nach etwa 20 min leichtem Rühren mit einem hängenden Rührer abgesiebt und waren verwendungsfähig.

1.3. Alginat-Gelteilchen enthaltend N,N-Di-i-butyl-N′-benzoylthioharnstoff

Etwa 100 g N,N-Di-n-butyl-N′-benzoylthioharnstoff wurden in einer Lösung suspendiert, welche durch Auflösen von etwa 12 g Natriumalginat (Protanal LF 20/60 R) in etwa 300 g entionisiertem Wasser und anschließendem Verdünnen mit etwa 185 g Wasser erhalten wurde. Die fertige Suspension wurde in eine 2%ige Calciumchloridlösung getropft. Nach etwa 20 min unter leichtem Rühren mit einem hängenden Rührer wurden die Gelperlen abgesiebt und waren verwendungsfähig.

In analoger Weise wurden Gelperlen mit folgenden Agentien und gegebenenfalls modifizierenden Mitteln hergestellt:

Tabelle zu Beispiel 1

| | Komplexierendes Agens | Hilfsmittel | Gelbildner |
|---|---|---|---|
| 1.4. | 7(1-Methyl-4-ethyl-octyl-)-8-Hydroxy-chinolin (Kelex 100 ®) auf Aerosil 805 ® | $BaSO_4$ (2,5 Gew.-%) | Natriumalginat Vernetzungsmittel: 2%ige $CaCl_2$-Lösung |
| 1.5. | N,N-Di-n-butyl-N'-benzoylthioharnstoff, suspendiert ohne Trägerstoff | _ _ | Chitosan (Vernetzungsmittel: Na-Tripolyphosphat 2 Gew.-% in Wasser) |
| 1.6. | O,O-Dialkyldithiophosphorsäureester (Hoechst HOE 3541 ®) auf Aerosil 805 ® | _ | Natriumalginat Vernetzungsmittel: 2%ige $CaCl_2$ Lösung |

Beispiel 2

Herstellung von das komplexierende Agens in der wäßrigen Phase suspendiert enthaltenden kovalent vernetzten Gelteilchen

10 g des analog zu Beispiel 1.1.a erhaltenen Feststoffes wurden mit 5 g entionisiertem Wasser und 20 g Polyurethan-Prepolymer (Hypol FHP 2000 der Fa. Grace) innig vermischt. Nach etwa 15 Min. wurde die Masse in eine 0,1 %ige Polyaminoamid-Härterlösung (XE 430 der Fa. Schering) eingespritzt. Je nach Einspritzgeschwindigkeit wurden kugelförmige oder fadenförmige diskrete Teilchen erhalten. Diese Polyurethanteilchen wurden 30 Min. in der Härterlösung belassen, abgesiebt und noch 15 Stunden ausgehärtet. Danach konnten sie direkt der Verwendung zugeführt werden. Fadenförmige Teilchen wurden auf die gewünschte Länge (vorzugsweise 5 bis 10 mm) zurechtgeschnitten.

Beispiel 3

Herstellung von das komplexierende Agens emulgiert enthaltenden ein ionotrop vernetztes Gel enthaltende Teilchen

3.1. Herstellung von Alginat-Gelteilchen, enthaltend eine Emulsion von 2-Hydroxy-5-t-nonyl-acetophenonoxim (SME 529 R)

20 g 2-Hydroxy-5-t-nonyl-acetophenonoxim (Shell-Öl SME 529 R), wurden mit 80 g der in Beispiel 1.1.b) beschriebenen Alginatlösung (Protanal LF 20/60 R) sowie einem Emulgator (HLB-Wert > 10; verwendet wurde Emulsogen L R, Hoechst AG) mit einem Turborührer (Ultra-Turrax) zu einer stabilen Emulsion verarbeitet. Hierzu wurden etwa 1 bis 2 Gew.-% Emulgator, bezogen auf das komplexierende Agens benötigt. Die Partikelgröße der emulgierten Öltröpfchen betrug etwa 25 µm. Die erhaltene Emulsion wurde in eine 2 %ige $CaCl_2$ -Lösung getropft, wobei sofort Gelperlen erhalten wurden. Die Perlen wurden noch 30 min. in der Vernetzungsflüssigkeit unter Rühren mit einem hängenden Rührer gerührt, abgesiebt und in einer 0,1%igen $CaCl_2$-Lösung aufbewahrt. Sie konnten entweder ihrem Verwendungszweck zugeführt werden oder aber in einer weiteren Behandlungsstufe mit einer ionenpermeablen Hülle versehen werden.

In analoger Weise wurden die in Tabelle 3 unter 3.2. bis 3.7. aufgelisteten teilchenförmigen Mittel hergestellt, die die angegebenen komplexierende Agentien, jeweils 1 bis 2 Gew.-% Emulgator sowie die angegebenen Hilfs- oder Lösungsmittel enthielten. Die Angaben in Klammern stellen die Gew.-%, bezogen auf das fertige Mittel, dar.

Tabelle zu Beispiel 3

| | komplexierendes Agens | Hilfs- oder Lösungsmittel |
|---|---|---|
| 3.2. | 2-Hydroxy-5-t-nonyl-acetophenonoxim (Shell SME 529 R) (27) | $TiO_2$ (7) |
| 3.3. | N,N-Dibutyl-N'-benzoyl-thioharnstoff (5) | Kerosin (25) |
| 3.4. | 7(1-Methyl-4-ethyl-octyl-)-8-hydroxychinolin (Kelex 100 R, Schering) (25) | $TiO_2$ (10) |
| 3.5. | 7(1-Methyl-4-ethyl-octyl-)-8-hydroxychinolin (Kelex 100 R, Schering) (15) | Kerosin (15) |
| 3.6. | O,O-Dialkyldithiophosphorsäureester (HOE F 3541 R) (10) | Kerosin (21) |
| 3.7. | Diisotridecylamin (HOE F 2562 R, Hoechst AG) (25) | Kerosin (5) |

Beispiel 4

Herstellung von Teilchen in welchen die das komplexierende Agens suspendiert oder emulgiert enthaltende wäßrige kontinuierliche Phase, von einer wasserunlöslichen, ionenpermeablen Hülle umschlossen ist

4.1. Herstellung von Teilchen, enthaltend eine Suspension von 7(1-Methyl-4-ethyl-oxyl-)-8-hydroxychinolin (Kelex 100 $^{R}$) angekoppelt an Trägermaterial

4.1.a. Herstellung der wäßrigen Phase

Durch Auflösen von 12 g Natriumalginat als Vernetzungsmittel in 300 g entionisiertem Wasser und Verdünnen mit 185 g Wasser wurde wie in Versuch 1.1.b beschrieben eine Alginatlösung hergestellt.

4.1.b Herstellung der eine vernetzbare Vorstufe eines Gels enthaltenden Lösung

In 300 ml einer etwa 1%igen Essigsäurelösung wurden wie in Versuch 1.1.c beschrieben 4,5 g Chitosan gelöst und mit 185 ml Wasser verdünnt.

4.1.c Wie in Versuch 1.1.a beschrieben, wurde Kelex 100 $^{R}$ im Gewichtsverhältnis von 1:1 an Aerosil R 805 $^{R}$ angekoppelt. Von dem hierbei erhaltenen Produkt wurden 20 g in 80 g der unter 4.1.a hergestellten Alginatlösung suspendiert. Die erhaltene Suspension wurde in die unter 4.1.b hergestellte Chitosanlösung getropft. Es bildeten sich sofort Kugeln mit einer vernetzten Gelhülle. Die erhaltenen kugelförmigen Partikel wurden nach etwa 30 min abgesiebt und ihrem Verwendungszweck bzw. einer weiteren Verarbeitungsstufe zugeführt.

4.2. Herstellung von Teilchen, enthaltend eine Emulsion von 2-Hydroxy-5-t-nonyl-acetophenonoxim (SME 529 $^{R}$)

In 180 g der in 4.1.a erhaltenen Alginatlösung wurde unter Verwendung eines Emulgators wie in Beispiel 3 beschrieben eine Emulsion von 20 g SME 529 $^{R}$ erzeugt. Diese Emulsion wurde dann, wie unter 4.1.c beschrieben, weiterbehandelt. Es wurden kugelförmige Partikel erhalten, die ihrem Verwendungszweck bzw. einer weiteren Verarbeitungsstufe zugeführt wurden.

Beispiel 5

Beschichten der diskreten Teilchen mit einer im wesentlichen wasserunlöslichen, ionenpermeablen Hülle

Als Vernetzungsmittel wurde $CaCl_2$ verwendet. Zur Tränkung mit dem Vernetzungsmittel wurden etwa 150 g der nach Beispiel 1, 3 oder 4 erhaltenen Perlen in 2%ige $CaCl_2$-Lösung gegeben und etwa 2 Stunden darin belassen, abgesiebt und noch kurz mit entionisiertem Wasser, welches 50 Gew.-% Ethanol enthielt, gewaschen und etwa 15 Min. lang an der Luft oberflächengetrocknet.

Dann wurden sie in 100 ml einer Lösung von Natriumalginat in entionisiertem Wasser eingesiebt. Diese Lösung wurde hergestellt, indem 30 g Natriumalginat in 1000 g entionisiertem Wasser gelöst wurden und die erhaltene Lösung durch Zugabe weiteren entionisierten Wassers auf eine 0,75 Gew.-% Alginat enthaltende Lösung verdünnt wurde. Die Perlen verblieben etwa 15 Min. unter leichtem Rühren mit einem hängenden Rührer in der Alginatlösung. In dieser Zeit diffundierten Calciumionen aus dem Inneren der Perlen an die Oberfläche und bewirkten die Vernetzung von Alginat unter Ausbildung einer wasserunlöslichen, ionenpermeablen Gelhülle.

Zur Aufarbeitung wurde die Lösung mit 1000 ml entionisiertem Wasser verdünnt. Die Perlen wurden anschließend abgesiebt, mit entionisiertem Wasser gewaschen, zur Nachvernetzung für 20 bis 30 Min. in eine gerührte, 2 %ige CaCl-Lösung getaucht und waren dann für die weitere Verwendung fertig.

Beispiel 6

Einstufige Herstellung von Gelperlen mit wasserunlöslicher ionenpermeabler Hülle

Es wurden getrennt voneinander eine Lösung A und eine Lösung B hergestellt.

Lösung A war eine Emulsion, die 1,5 Gew.-% Natriumalginat (Protanal LF 20/60) in 88,5 Gew.-% entionisiertem Wasser sowie etwa 10 Gew.-% 2-Hydroxy-5-t-nonyl-acetophenonoxim (SME 529 $^{R}$, Shell)

enthielt.

Lösung B war eine 3,3 Gew.-% enthaltende Lösung von Natriumalginat in entionisiertem Wasser.

Lösung A wurde der zentralen Öffnung einer Zweistoffdüse zugeführt; um diese zentrale Öffnung war eine weitere Öffnung konzentrisch angeordnet. Ihr wurde die Lösung B zugeführt. Die Flußrate von Lösung A : Lösung B wurde auf ein Verhältnis von etwa 2 : 3 eingestellt. Es entstandenen Tropfen, die in eine gerührte, etwa 2 %ige $CaCl_2$-Lösung eingetropft wurden. Zur Vervollständigung der Vernetzung wurden die entstandenen Kugeln etwa 45 Min. in der mit hängendem Rührer gerührten Vernetzungslösung gehalten und dann abgesiebt, mit entionisiertem Wasser gewaschen und getrocknet. Die erhaltenen Perlen konnten sofort dem Verwendungszweck zugeführt werden.

Beispiel 7

Einstufige Herstellung des umhüllten Mittels, enthaltend ein thermisch vernetztes Gel als Kernmaterial und eine zunächst ionotrop vernetzte Hülle, die zur Verstärkung in eine kovalent vernetzte Hülle überführt wird

7.1. Das komplexierendes Agens emulgiert enthaltende Teilchen

7.1.a Herstellung der Emulsion

200 ml einer 2 Gew.-%igen wäßrigen Agar-Lösung wurden auf etwa 60 °C erhitzt und dort bis zur endgültigen Vernetzung temperiert. In diese Lösung wurden zunächst etwa 4 g Natriumtripolyphosphat gegeben. Anschließen gab man Carboxymethylcellulose zu, um die Viskosität der Lösung zu erhöhen. Die Menge dieses viskositätserhöhenden Mittels wurde so bemessen, daß bei der nachfolgenden Vernetzung im Vernetzerbad die eingetropfte, fertige Emulsion nicht zerlief, sondern die Tropfenform erhalten blieb. Hierzu waren etwa 3 g Carboxymethylcellulose notwendig. Die Lösung wurde dann mit Phosphorsäure auf einen pH-Wert von etwa 5 eingestellt und mittels eines Turborührers (Ultra-Turrax) wtwa 20 g des flüssigen komplexierenden Mittels 7(1-Methyl-4-ethyl-octyl-)-8-hydroxychinolin (Kelex 100 $^R$, Schering AG) emulgiert, wobei die Emulsion mittels 0,5 g eines Emulgators (Emulsogen L $^R$, Hoechst AG) stabilisiert wurde. Die fertige Emulsion wurde bis zur Weiterverarbeitung auf etwa 60 °C temperiert.

7.1.b Herstellung des Vernetzerbads

In 1000 ml einer 1 Gew.-%igen wäßrigen Eisessiglösung (pH-Wert: etwa 4) wurden 10 g Chitosan gelöst. Hierzu wurde ein High-Viscosity-Chitosan der Firma Chungai Boyeki, Düsseldorf verwendet. Die erhaltene, 1 Gew.-%ige Chitosan-Lösung wurde anschließend mittels Wasser auf einen Gehalt von 0,3 Gew.-% Chitosan verdünnt. Das Vernetzerbad bestand aus 2000 ml dieser 0,3 Gew.-%igen Chitosan-Lösung und wurde auf 15 °C temperiert.

7.1.c Herstellung der Teilchen

Die auf 60 °C temperierte Emulsion des komplexierenden Agens wurde dann in das auf 15 °C temperierte Vernetzerbad eingetropft. Die hierbei gebildeten Perlen verblieben etwa 15 min in der Lösung, wurden abgesiebt und 5 Stunden in einer Pufferlösung aufbewahrt (0,1n $Na_2HPO_4$ in Wasser, pH-Wert: etwa 8).

Anschließend wurden die Perlen erneut abgesiebt und zur Verstärkung der Hülle in ein zweites Vernetzerbad getaucht. Dieses zweite Vernetzerbad war eine durch Natronlauge auf einen pH-Wert von etwa 7 eingestellte, durch Vermischen von etwa 15 g Glutardialdehyd mit 500 ml Wasser erhaltene Lösung. Nach 30 Minuten in diesem zweiten Vernetzerbad wurden die Perlen abgesiebt, gewaschen und waren verwendungsfähig.

7.2. Das komplexierende Agens suspendiert enthaltende Teilchen

Etwa 30 g eines Feststoffes, welcher entsprechend Beispiel 1.1.a) hergestellt worden war und als komplexierendes Agens 2-Hydroxy-5-t-nonyl-acetophenonoxim (SME 529 $^R$, Shell AG) angekoppelt an hydrophobiertes Silica-Aerogel (Aerosil R 805, Degussa AG) enthielt, wurde vor dem Suspendieren fein gepulvert und in einer analog Beispiel 7.1.a hergestellten wäßrigen Agar-Lösung suspendiert und die erhaltene Suspension wie im Beispiel 7.1.c beschrieben in ein nach 7.1.b erhaltenes Vernetzerbad eingebracht und weiterverarbeitet.

Beispiel 8

Verwendung des erfindungsgemäß hergestellten Mittels zur Abtrennung von $Cu^{2+}$- und $Ni^{2+}$-Ionen

A) In 100 ml einer Lösung, die 67,2 mg/l $Cu^{2+}$-Ionen und 65,9 mg/l $Ni^{2+}$-Ionen enthielt, wurden etwa 10 g der in Beispiel 3.1. hergestellten Alginatperlen, sowie etwa 0,1, g $CaCl_2$ gegeben. Bei Raumtemperatur wurde 30 Min. intensiv mit einem magnetisch betriebenen Rührer gerührt. Währenddessen sank der pH-Wert von 4,8 auf 2,7. Die Perlen wurden abgesiebt und die Restkonzentration an $Cu^{2+}$ und $Ni^{2+}$ in der Lösung durch Atomabsorptionsspektroskopie bestimmt. Für $Cu^{2+}$ wurde eine Restkonzentration von 15 % und für $Ni^{2+}$ eine solche von 85 % des ursprünglichen Wertes ermittelt.

Die mit Schwermetallionen beladenen Perlen wurden mit 50 ml einer 1-normalen Salzsäure, welche 0,1 Gew.-% $CaCl_2$ enthält, regeneriert. Das absorbierte $Ni^{2+}$ konnte nach 30 Min., das absorbierte $Cu^{2+}$ nach 60 Min. vollständig zurückgewonnen werden, während die regenerierten Perlen der erneuten Verwendung zugeführt werden konnten.

B) Der unter A) beschriebene Versuch wurde wiederholt. Diesmal wurden 20 g der in Beispiel 7.1. hergestellten etwa 10 Gew.-% SME 529 emulgiert als komplexierendes Agens enthaltenden Teilchen eingesetzt. Das erzielte Trennergebnis war dem in A) erhaltenen Ergebnis vergleichbar.

**Patentansprüche**

1. Zur selektiven Abtrennung von Metallkationen aus wäßrigen Lösungen geeignetes teilchenförmiges Mittel, enthaltend (ein die Metallkationen komplexierendes Agens dispergiert in einer kontinuierlichen wäßrigen Phase, welche gegebenenfalls in ein hydrophiles Gel eingebettet und/oder Bestandteil eines hydrophilen Gels ist, dadurch gekennzeichnet, daß es als Agens ein organisches, nicht ionisches, nicht polymeres, die Metallkationen komplexierendes Agens mit einem Molgewicht <1000 Dalton enthält und die das Agens enthaltende wäßrige Phase
   von einer wasserunlöslichen, ionenpermeablen Hülle umgeben ist oder
   in ein hydrophiles Gel eingebettet und/oder Bestandteil eines hydrophilen Gels ist.

2. Mittel nach Anspruch 1,dadurch gekennzeichnet, daß die wäßrige Phase in ein Gel eingebettet oder Bestandteil eines Gels ist.

3. Teilchenförmiges Mittel nach Anspruch 1 oder 2, dadurch gekennzeichnet, daß es durch eine im wesentlichen wasserunlösliche, für Ionen permeable Hülle umgeben ist.

4. Mittel nach Anspruch 1, 2 oder 3, dadurch gekennzeichnet, daß das Gel ein hydrophiles vernetztes organisches Gel ist.

5. Mittel nach Anspruch 4, dadurch gekennzeichnet, daß die kontinuierliche wäßrige Phase in ain thermisch vernetztes hydrophiles organisches Gel eingebettet und von einem kovalent vernetzten hydrophilen organischen Gel umumhüllt ist.

6. Mittel nach einem der vorhergehenden Ansprüche, dadurch gekennzeichnet, daß es aus Teilchen mit einem Durchmesser von etwa 0,1 mm bis etwa 6 mm besteht.

7. Mittel nach einem der vorhergehenden Ansprüche, dadurch gekennzeichnet, daß es etwa 0,5 bis 30 Gew.-% Gelbildner, etwa 1 bis 50 Gew.-% komplexierendes Agens, 0 bis etwa 40 Gew.-% wasserunlösliches Lösungsmittel, 0 bis etwa 10 Gew.-% übliche Hilfsmittel sowie etwa 40 bis 90 Gew.-% Wasser enthält.

8. Mittel nach einem der vorhergehenden Ansprüche, dadurch gekennzeichnet, daß es das komplexierende Agens angekoppelt an ein hydrophobiertes Trägermaterial enthält.

9. Verwendung des teilchenförmigen Mittels nach einem der Ansprüche 1 bis 8 zur Abtrennung von Metallkationen aus wäßrigen Lösungen.

10. Verfahren zur Herstellung eines zur selektiven Abtrennung von Metallkationen aus wäßrigen Lösungen geeigneten teilchenförmigen Mittels nach einem der Ansprüche 1 bis 8, dadurch gekennzeichnet, daß

man

a) das komplexierende Agens in einer wäßrigen Phase dispergiert, welche ein Vernetzungsmittel, eine durch ein Vernetzungsmittel vernetzbare Vorstufe eines hydrophilen Gels oder eine thermisch vernetzbare Vorstufe eines hydrophilen Gels enthält

b) zur Bildung von Teilchen aus der unter a) erhaltenen Dispersion

b1) die ein Vernetzungsmittel enthaltende Dispersion zur Verkapselung mit einer im wesentlichen wasserunlöslichen, ionenpermeablen Hülle in eine Lösung einbringt, die eine durch das Vernetzungsmittel vernetzbare Gelvorstufe eines wasserunlöslichen, ionenpermeablen Hüllmaterials enthält, oder

b2) die eine durch Hitze thermisch vernetzbare oder durch Kälte thermisch vernetzbare Vorstufe eines hydrophilen Gels enthaltende Dispersion zur Ausbildung diskreter Gelteilchen in eine flüssige Phase einbringt, welche eine zur thermischen Vernetzung der Gelvorstufe ausreichend hohe Temperatur besitzt, oder eine zur thermischen Vernetzung der Gelvorstufe ausreichend tiefe Temperatur besitzt, oder

b3) die eine durch Vernetzungsmittel vernetzbare Vorstufe eines hydrophilen Gels enthaltende Dispersion in eine das Vernetzungsmittel enthaltende Lösung einbringt oder das Vernetzungsmittel in die Dispersion einarbeitet

und gegebenenfalls

c) die erhaltenen Teilchen mit einer im wesentlichen wasserunlöslichen ionenpermeablen Hülle beschichtet und/oder eine die Teilchen umgebende Hülle aus einem nicht kovalent vernetzten aminogruppenhaltigen Hüllmaterial durch zusätzliche kovalente Vernetzung verstärkt.

**11.** Verfahren nach Anspruch 10, dadurch gekennzeichnet, daß man in Stufe c) die Teilchen mit einer vernetzbaren Gelvorstufe des Hüllmaterials kontaktiert und die vernetzbare Gelvorstufe vernetzt.

**12.** Verfahren nach Anspruch 10, dadurch gekennzeichnet, daß man eine in Stufe a) erhaltene Dispersion, welche eine vernetzbare Vorstufe eines Gels enthält, und eine zweite Flüssigkeit, welche eine vernetzbare Gelvorstufe einer wasserunlöslichen, ionenpermeablen Hülle enthält, derart gemeinsam in eine dritte Flüssigkeit eingibt, daß die Dispersion von der zweiten Flüssigkeit umgeben ist.

**13.** Verfahren nach Anspruch 12, dadurch gekennzeichnet, daß man die in Stufe a) erhaltene Dispersion durch eine Düse eingibt, welche von einem die zweite Flüssigkeit zuführenden Rohr umgeben ist.

**14.** Verfahren nach Anspruch 10, dadurch gekennzeichnet, daß man eine in Stufe a) erhaltene Dispersion, welche eine thermisch vernetzbare Vorstufe des in dem Teilchen zu bildenden Gels und ein Vernetzungsmittel, welches ionotrope vernetzbare Gelvorstufen zu vernetzen vermag, in eine ausreichend kalte oder ausreichend warme wäßrige Lösung einer ionotrop vernetzbaren Gelvorstufe des Hüllmaterials eingibt.

**15.** Verfahren nach Anspruch 14, dadurch gekennzeichnet, daß als thermisch vernetzbare Vorstufe des in den Teilchen zu bildenden Gels eine durch Kälte vernetzbare Vorstufe verwendet wird.

**16.** Verfahren nach Anspruch 14 oder 15, dadurch gekennzeichnet, daß als Vernetzungsmittel ein anionisches Vernetzungsmittel und als ionotrop vernetzbare Gelvorstufe des Hüllmaterials ein aminozuckerhaltiges Polysaccharid verwendet wird.

**17.** Verfahren nach Anspruch 10 bis 16, dadurch gekennzeichnet, daß man aminogruppenhaltiges, nicht kovalent vernetztes Hüllmaterial zur Verstärkung der Hülle mit einem Vernetzungsmittel kontaktiert, welches Aminogruppen kovalent zu vernetzen vermag.

**18.** Verfahren nach Anspruch 10, dadurch gekennzeichnet, daß man in Stufe a) ein komplexierendes Agens, welches angekoppelt an ein festes hydrophobiertes Trägermaterial ist, in der wäßrigen Phase suspendiert.

## Claims

**1.** A particulate agent suitable for the selective separation of metal cations from aqueous solutions, containing an agent which complexes the metal cations, dispersed in a continuous aqueous phase

which is optionally embedded in a hydrophilic gel and/or is a constituent of a hydrophilic gel, characterised in that it contains as agent an organic, non-ionic, non-polymeric agent which complexes the metal cations and has a molar weight of <1000 Dalton and the aqueous phase containing the agent is surrounded by a water-insoluble, ion-permeable shell
or
is embedded in a hydrophilic gel and/or is a constituent of a hydrophilic gel.

**2.** An agent according to Claim 1, characterised in that the aqueous phase is embedded in a gel or is a constituent of a gel.

**3.** A particulate agent according to Claim 1 or 2, characterised in that it is surrounded by a substantially water-insoluble shell which is permeable to ions.

**4.** An agent according to Claim 1, 2 or 3, characterised in that the gel is a hydrophilic crosslinked organic gel.

**5.** An agent according to Claim 4, characterised in that the continuous aqueous phase is embedded in a thermally cross-linked hydrophilic organic gel and is surrounded by a covalently cross-linked hydrophilic organic gel.

**6.** An agent according to one of the preceding Claims, characterised in that it consists of particles having a diameter of about 0.1 mm to about 6 mm.

**7.** An agent according to one of the preceding Claims, characterised in that it contains approximately 0.5 to 30% by weight gelling agent, approximately 1 to 50% by weight complexing agent, 0 to about 40% by weight water-insoluble solvent, 0 to about 10% by weight conventional auxiliaries and about 40 to 90% by weight water.

**8.** An agent according to one of the preceding Claims, characterised in that it contains the complexing agent coupled to a water-repellent support material.

**9.** The use of the particulate agent according to one of Claims 1 to 8 for separating off metal cations from aqueous solutions.

**10.** A method for producing a particulate agent suitable for the selective separation of metal cations from aqueous solutions in accordance with one of Claims 1 to 8, characterised in that
a) the complexing agent is dispersed in an aqueous phase which contains a cross-linking agent, a precursor of a hydrophilic gel which can be cross-linked by a cross-linking agent, or a precursor of a hydrophilic gel which can be thermally cross-linked
b) to form particles from the dispersion obtained under a)
b1) the dispersion containing a cross-linking agent, for encapsulating with a substantially water-insoluble, ion-permeable shell, is introduced into a solution which contains a gel precursor, which can be cross-linked by the cross-linking agent, of a water-insoluble, ion-permeable shell material, or
b2) the dispersion containing a precursor of a hydrophilic gel which can be cross-linked thermally by heat or can be cross-linked thermally by cold, in order to form discrete gel particles, is introduced into a liquid phase which has a temperature sufficiently high for thermal cross-linking of the gel precursor, or has a temperature sufficiently low for thermal cross-linking of the gel precursor, or
b3) the dispersion containing a precursor of a hydrophilic gel which can be cross-linked by cross-linking agent is introduced into a solution containing the cross-linking agent, or the cross-linking agent is worked into the dispersion,
and optionally
c) the resulting particles are coated with a substantially water-insoluble, ion-permeable shell and/or a shell of a non-covalent, cross-linked shell material containing amino groups which surrounds the particles is strengthened by additional covalent cross-linking.

**11.** A method according to Claim 10, characterised in that in stage c) the particles are contacted with a

cross-linkable gel precursor of the shell material and the cross-linkable gel precursor is cross-linked.

**12.** A method according to Claim 10, characterised in that a dispersion obtained in stage a) which contains a cross-linkable precursor of a gel, and a second liquid which contains a cross-linkable gel precursor of a water-insoluble, ion-permeable shell are added jointly to a third liquid such that the dispersion is surrounded by the second liquid.

**13.** A method according to Claim 12, characterised in that the dispersion obtained in stage a) is introduced through a nozzle which is surrounded by a pipe supplying the second liquid.

**14.** A method according to Claim 10, characterised in that a dispersion obtained in stage a) which contains a precursor which can be thermally cross-linked of the gel to be formed in the particle and a cross-linking agent which is capable of cross-linking ionotropic cross-linkable gel precursors, are introduced into a sufficiently cold or sufficiently hot aqueous solution of an ionotropic cross-linkable gel precursor of the shell material.

**15.** A method according to Claim 14, characterised in that a precursor which can be cross-linked by cold is used as the thermally cross-linkable precursor of the gel to be formed in the particles.

**16.** A method according to Claim 14 or 15, characterised in that an anionic cross-linking agent is used as the cross-linking agent and a polysaccharide containing amino sugar is used as the ionotropically cross-linkable gel precursor of the shell material.

**17.** A method according to Claims 10 to 16, characterised in that non-covalently cross-linked shell material containing amino groups is contacted with a cross-linking agent which is capable of cross-linking amino groups covalently, in order to strengthen the shell.

**18.** A method according to Claim 10, characterised in that in stage a) a complexing agent which is coupled to a solid water-repellent carrier material is suspended in the aqueous phase.

## Revendications

**1.** Agent particulaire convenant à la séparation sélective de cations métalliques à partir de solutions aqueuses, contenant un agent complexant les cations métalliques dispersé dans une phase aqueuse continue qui est éventuellement noyée dans un gel hydrophile et/ou est partie intégrante d'un gel hydrophile, caractérisé en ce qu'il contient, en tant qu'agent. un agent organique, non ionique, non polymère complexant les cations métalliques, d'un poids moléculaire < 1000 daltons et que la phase aqueuse contenant l'agent est entourée d'une enveloppe insoluble dans l'eau, perméable aux ions ou est noyée dans un gel hydrophile et/ou est partie intégrante d'un gel hydrophile.

**2.** Agent selon la revendication 1, caractérisé en ce que la phase aqueuse est noyée dan un gel ou est partie intégrante d'un gel.

**3.** Agent particulaire selon la revendication 1 ou 2, caractérise en ce qu'il est entouré d'une enveloppe essentiellement insoluble dans l'eau, perméable aux ions.

**4.** Agent selon la revendication 1, 2 ou 3, caractérisé en ce que le gel est un gel organique hydrophile réticulé.

**5.** Agent selon la revendication 4, caractérisé en ce que la phase aqueuse continue est noyée dans un gel organique hydrophile réticulé thermiquement et entourée d'un gel organique hydrophile réticulé de façon covalente.

**6.** Agent selon l'une des revendications précédentes, caractérisé en ce qu'il est constitué de particules d'un diamètre d'environ 0,1 mm à environ 6 mm.

**7.** Agent selon l'une des revendications précédentes, caractérisé en ce qu'il contient environ 0,5 à 30% en poids d'un agent gélifiant, environ 1 à 50% en poids d'un agent complexant, 0 à environ 40% en

poids de solvant insoluble dans l'eau, 0 à environ 10% en poids d'additifs usuels ainsi qu'environ 40 à 90% en poids d'eau.

**8.** Agent selon l'une des revendications précédentes, caractérisé en ce qu'il contient l'agent complexant couplé à un support hydrofugé.

**9.** Utilisation de l'agent particulaire selon l'une des revendications 1 à 8 pour la séparation de cations métalliques de solutions aqueuses.

**10.** Procédé pour la préparation d'un agent particulaire convenant à la séparation sélective de cations métalliques à partir de solutions aqueuses selon l'une des revendications 1 à 8, caractérisé en ce que

a) on disperse l'agent complexant dans une phase aqueuse contenant un agent réticulant, un précurseur d'un gel hydrophile réticulable par un réticulant ou un précurseur d'un gel hydrophile thermiquement réticulable,

b) en vue de la formation de particules à partir de la dispersion obtenue sous a),

b1) on introduit la dispersion contenant un réticulant pour l'encapsulation à l'aide d'une enveloppe essentiellement insoluble dans l'eau, perméable aux ions dans une solution contenant un précurseur de gel d'un matériau d'enveloppe insoluble dans l'eau, perméable aux ions, réticulable par le réticulant, ou

b2) on introduit la dispersion contenant un précurseur d'un gel hydrophile thermiquement réticulable par la chaleur ou thermiquement réticulable par le froid pour la formation de particules de gel discrètes, dans une phase liquide qui possède une température suffisamment élevée pour la réticulation thermique du précurseur de gel ou une température suffisamment basse pour la réticulation thermique du précurseur de gel ou

b3) on introduit une dispersion contenant un précurseur d'un gel hydrophile réticulable par un réticulant, dans une solution contenant le réticulant, ou l'on incorpore le réticulant dans la dispersion et, le cas échéant,

c) on enrobe les particules obtenues d'une enveloppe essentiellement insoluble dans l'eau, perméable aux ions et/ou l'on renforce par une réticulation covalente additionnelle une enveloppe entourant les particules constituée d'un matériau d'enveloppe porteur de groupes amino, non réticulé de façon covalente.

**11.** Procédé selon la revendication 10, caractérisé en ce que, dans l'étape c), on met les particules en contact avec un précurseur de gel du matériau d'enveloppe réticulable et réticule le précurseur de gel réticulable.

**12.** Procédé selon la revendication 10, caractérisé en ce qu'on introduit simultanément une dispersion obtenue dans l'étape a) contenant un précurseur d'un gel réticulable et un deuxième liquide contenant un précurseur de gel réticulable d'une enveloppe insoluble dans l'eau, perméable aux ions, dans un troisième liquide de telle façon que la dispersion soit entourée du deuxième liquide.

**13.** Procédé selon la revendication 12, caractérisé en ce qu'on introduit la dispersion obtenue dans l'étape a) à travers une buse qui est entourée d'un tube amenant le deuxième liquide.

**14.** Procédé selon la revendication 10, caractérisé en ce qu'on introduit une dispersion obtenue dans l'étape a) contenant un précurseur thermiquement réticulable du gel à former dans la particule et un réticulant susceptible de réticuler des précurseurs de gel ionotropes réticulables, dans une solution aqueuse suffisamment froide ou suffisamment chaude d'un précurseur de gel du matériau d'enveloppe réticulable de façon ionotrope.

**15.** Procédé selon la revendication 14, caractérisé en ce qu'on utilise comme précurseur du gel à former dans les particules, réticulable thermiquement, un précurseur réticulable à froid.

**16.** Procédé selon la revendication 14 ou 15, caractérisé en ce qu'on utilise comme réticulant un réticulant anionique et comme précurseur de gel du matériau d'enveloppe, réticulable de façon ionotrope,un polysaccharide contenant un aminoglucide.

**17.** Procédé selon les revendications 10 à 16, caractérisé en ce que, pour le renforcement de l'enveloppe,

on met en contact le matériau d'enveloppe porteur de groupes amino, non réticulé de façon covalente avec un réticulant qui est susceptible de réticuler les groupes amino de façon covalente.

**18.** Procédé selon la revendication 10, caractérisé en ce que, dans l'étape a), on met en suspension dans la phase aqueuse un agent complexant qui est couplé à un support hydrofugé solide.